# EUROPEAN PATENT SPECIFICATION

(11) **EP 3 787 358 B1**
(45) Date of publication and mention of the grant of the patent: **28.01.2026**
(21) Application number: 19793512.5
(22) Date of filing: 22.04.2019
(51) Int. Cl.: H04W 72/04, H04B 7/155, H04W 84/12, H04W 88/04

(54) **CHANNEL RESOURCE COORDINATION AND ALLOCATION**
KANALRESSOURCENKOORDINATION UND -ZUTEILUNG
COORDINATION ET D'ATTRIBUTION DE RESSOURCES DE CANAL

(30) Priority: 26.04.2018 CN 201810385842
(43) Date of publication of application: 03.03.2021
(73) Proprietor: Huawei Technologies Co., Ltd., Longgang District Shenzhen, Guangdong 518129 (CN)
(72) Inventor: CHEN, Huangxun, Shenzhen, Guangdong 518129 (CN); ZHANG, Qian, Hong Kong 999077 (CN); LI, Yunbo, Shenzhen, Guangdong 518129 (CN)
(74) Representative: Pfenning, Meinig & Partner mbB
(86) International application number: PCT/CN2019/083687
(87) International publication number: WO 2019/206080

(56) References cited:
- CN-A- 101 170 343
- CN-A- 102 143 588
- US-A1- 2013 070 628
- US-A1- 2014 355 434
- US-A1- 2015 327 265
- XIAOFEI WANG (INTERDIGITAL): "Relays for 11ay ; 11-16-0337-00-00ay-relays-for-11ay", IEEE DRAFT; 11-16-0337-00-00AY-RELAYS-FOR-11AY, IEEE-SA MENTOR, PISCATAWAY, NJ USA, vol. 802.11ay, 11 March 2016 (2016-03-11), pages 1 - 15, XP068105206
- ALFRED ASTERJADHI (QUALCOMM INC): "TWT Information frames in 11ax ; 11-16-1420-00-00ax-twt-information-frames-in-11ax", vol. 802.11ax, 7 November 2016 (2016-11-07), pages 1 - 11, XP068110822, Retrieved from the Internet <URL:https://mentor.ieee.org/802.11/dcn/16/11-16-1420-00-00ax-twt-information-frames-in-11ax.pptx> [retrieved on 20161107]
- TAO, ZHIFENG ET AL.: "Frame Structure Design for IEEE 802.16j Mobile Multihop Relay (MMR) Networks", IEEE GLOBAL TELECOMMUNICATIONS CONFERENCE, 26 December 2007 (2007-12-26), XP031196746
- JEONG, A.H. ET AL.: "Proportional Fair Scheduling Combined with Adjustment of Two Hop Transmission Time for Relay-Aided OFDMA Systems", 2009 INTERNATIONAL CONFERENCE ON WIRELESS COMMUNICATIONS & SIGNAL PROCESSING, 31 December 2009 (2009-12-31), XP031594737

## Description

### TECHNICAL FIELD

This application relates to the field of communications technologies, and in particular, to a channel resource coordinated allocation method, a relay device and a computer-readable storage medium.

### BACKGROUND

In recent years, an internet of things (IoT) technology develops rapidly and starts to be widely applied in production and life. This significantly facilitates automation and intelligence in industrial and commercial activities and daily life. A core technology that boosts development of the internet of things lies in timely and effective wireless communication between internet of things nodes. As a mainstream technology in current wireless communication, Wi-Fi stands out as one of primary choices for internet of things communication. To adapt a Wi-Fi technology to characteristics of the internet of things, the Institute of Electrical and Electronics Engineers (Institute of Electrical and Electronics Engineers, IEEE for short) formulates a series of new standards, such as 802.11ah and 802.11ax.

Generally, an internet of things communications network has the following characteristics:
(1) Numerous internet of things nodes: Masses of internet of things nodes are deployed for data collection and summarization, especially in scenarios of large-scale industrial production and commercial activities.
(2) Widely distributed internet of things nodes: An internet of things network needs to cover a large area, for example, in a smart city scenario.
(3) Narrowband communication used for internet of things nodes: Narrowband communication helps save energy for the internet of things nodes, especially internet of things nodes powered by batteries, and reduces maintenance costs of an entire internet of things network.

Due to characteristics of numerous and widely distributed internet of things nodes, coverage of a wireless fidelity (Wireless Fidelity, Wi-Fi for short) network needs to be effectively expanded. In addition, narrowband communication of the internet of things node is susceptible to channel shadow fading, and internet of things nodes in different geographical locations may need to select different narrowband subchannels for transmission. Therefore, an access point (Access Point, AP for short) needs to switch between a plurality of subchannels to serve an associated internet of things node on each subchannel.

A network with a relay can be used to effectively expand network coverage. However, currently, there still lacks a proper and effective mechanism to coordinate channel utilization in a relay network architecture. Therefore, in the network with a relay, an urgent problem to be resolved is to coordinate channel utilization to avoid a communication failure that is caused by unmatched channel utilization between an access point AP and a relay (relay) when the access point AP and the relay (relay) both need to switch between a plurality of subchannels to serve a plurality of stations.

US 2015/327265 A1 relates to a method of allocating resources in a wireless local area network (WLAN) system.

### SUMMARY

The invention is set out in the appended set of claims. This application provides a channel resource coordinated allocation method for channel allocation information exchange between nodes, to implement channel coordinated utilization in an internet of things network with a relay.

According to a first aspect, a channel resource coordinated allocation method is provided, including: receiving, by a relay device (a child node), first channel allocation information sent by an access point AP (a parent node), where the relay device is one of one or more child nodes of the access point AP, the AP is the parent node of the relay device, the first channel allocation information includes indication information used to indicate a first time period on a subchannel, and the first time period is operation time of a first device on the subchannel; and generating, by a second device, second channel allocation information based on the first channel allocation information, where the second channel allocation information includes indication information used to indicate a second time period on the subchannel, and the second time period is operation time of the relay device on the subchannel; where the second time period includes the first time period. Through resource allocation information exchange between the access point AP and the relay device, that is, the parent node and the child node, normal and matched communication between the access point AP and the relay device can be ensured. Therefore, coordinated utilization of channel is implemented. This avoids unmatched communication caused due to the following case: The parent node sends data to the child node in a time period 1 on a subchannel 2, but the child node waits, on the subchannel 2 in a time period 2 different from the time period 1, for receiving the data of the parent node and therefore cannot receive, in the time period 2, information sent by the parent node in the time period 1.

According to a second aspect, a channel resource coordinated allocation method is provided, where the method includes: sending, by an access point AP (a parent node), first channel allocation information to a relay device (a child node), where the relay device is one of one or more child nodes of the access point AP, the first channel allocation information includes indication information used to indicate a first time period on a subchannel, and the first time period is operation time of the parent node on the subchannel. The first channel allocation information is used for the child node to generate second channel allocation information based on the first channel allocation information. The second channel allocation information includes indication information used to indicate a second time period on the subchannel, and the second time period is operation time of the child node on the subchannel. The second time period includes the first time period. Through information exchange between the parent node and the child node, normal and matched communication between the parent node and the child node can be ensured. Therefore, coordinated utilization of channel is implemented. This avoids unmatched communication caused due to the following case: The parent node sends data to the child node in a time period 1 on a subchannel 2, but the child node waits, on the subchannel 2 in a time period 2 different from the time period 1, for receiving the data of the parent node and therefore cannot receive, in the time period 2, information sent by the parent node in the time period 1.

In some possible implementations, operation time of the access point AP is a time period in which the access point may perform transmission or communication with another node different from the access point. For example, the access point AP may send information to a child node of the access point AP in the operation time, and may further receive, in the operation time, information sent by the child node of the access point AP.

In some possible implementations, operation time of the relay device is a time period in which the relay device may perform transmission or communication with another node different from the relay device. For example, the relay device may send information to a station associated with the relay device in the operation time, and may further receive, in the operation time, information sent by a station associated with the relay device.

In some possible implementations, the subchannel is an operating channel between the access point AP and the relay device, and the operating channel is a channel on which the access point AP and the relay device communicate with each other.

In some possible implementations, the subchannel is one of a plurality of subchannels, and the second channel allocation information further includes indication information used to indicate a time period on another subchannel different from the subchannel in the plurality of subchannels, where the time period on the another subchannel is operation time of the relay device on the another subchannel and is different from the second time period. By sending the second channel allocation information, a child node or station associated with the relay device can obtain a subchannel and a time period that can be used for communicating with the second device. Therefore, communication reliability is improved.

In some possible implementations, the operation time of the relay device includes the second time period and a time period on the another subchannel.

In some possible implementations, when duration of each time period in the operation time of the relay device is equal, the second channel allocation information further includes the duration of the time period in the operation time of the relay device. By allocating equal durations of the time periods, signaling overheads for channel allocation information can be effectively reduced.

In some possible implementations, when durations of at least two time periods in the operation time of the relay device are unequal, the second channel allocation information further includes an end moment of each time period in the operation time of the relay device. By allocating unequal durations of time periods, coordinated utilization of channel can be more flexible.

In some possible implementations, the relay device may further receive occupation information that is sent by the access point AP and that is used to indicate occupation of a time period on a scheduled subchannel in a system. The scheduled subchannel includes at least the subchannel. The system includes the AP and a plurality of relay devices, and the relay device is one of the plurality of relay devices. Based on the occupation information, the relay device can obtain a channel occupation status in the entire system. Therefore, the relay device can select an unoccupied time period or a time period having a low occupation rate as the operation time of the relay device. This reduces collisions between a channel allocated to the relay device and a channel allocated to another node.

In some possible implementations, the occupation information includes: a time offset, used to indicate a start moment of a time period with an earliest start moment in the time period occupied on the scheduled subchannel in the system;
a time period quantity identifier, used to indicate a quantity of time periods occupied on the scheduled subchannel in the system; a subchannel identifier, used to indicate each of all scheduled subchannels; and a subchannel time period occupation identifier, used to indicate whether each time period on each of the scheduled subchannel in the system is occupied, or used to indicate a quantity of basic service sets that occupy each time period on each of the scheduled subchannel in the system; where the time period occupied on the scheduled subchannel in the system includes at least the first time period. By using an occupation identifier, the child node may obtain that specific time periods on specific subchannels in the system are occupied. Then, the child node tries to select an unoccupied time period or a time period having a relatively low occupation rate as the operation time of the child node. This may avoid that a plurality of child nodes perform communication at same operation time on a same channel. Therefore, repeated utilization of a channel is reduced and utilization of an idle channel is improved.

In some possible implementations, the second channel allocation information further includes a periodicity identifier. The periodicity identifier is used to indicate whether a time period occupied by the second device on the subchannel is periodic. Based on the periodicity identifier, when channel resource allocation of a node is the same in a plurality of periods, the node does not need to send the channel allocation information in each period. Therefore, signaling overheads are reduced.

In some possible implementations, when the periodicity identifier indicates that periodicity exists, the second channel allocation information further includes a period quantity identifier, used to indicate a quantity of periods. Based on the quantity of periods, the child node can determine a valid duration of the channel allocation information.

In some possible implementations, the second channel allocation information further includes a period total duration identifier, used to indicate a period total duration for time periods occupied on the subchannel by the second device. Based on the period total duration identifier, the child node can determine a valid duration of the channel allocation information.

In some possible implementations, the first channel allocation information is a subchannel selective transmission element or a restricted access time window element. By using the subchannel selective transmission element or a restricted access time window element, nodes supporting subchannel selective transmission can be effectively compatible. Therefore, compatibility is improved.

According to a third aspect, a channel resource coordinated allocation method is provided, where the method includes: receiving, by an access point AP (a parent node), second channel allocation information sent by a relay device (a child node), where the relay device is one of one or more child nodes of the access point AP, the second channel allocation information includes indication information used to indicate a second time period on a subchannel, and the second time period is operation time of the relay device on the subchannel; generating, by the access point AP, first channel allocation information based on the second channel allocation information, where the first channel allocation information includes indication information used to indicate a first time period on the subchannel, and the first time period is operation time of the access point AP on the subchannel; where the second time period includes the first time period; and sending, by the access point AP, the first channel allocation information to the child node, including the relay device, of the access point AP. Through information exchange between the parent node and the child node, normal and matched communication between the parent node and the child node can be ensured. Therefore, channel coordinated utilization are implemented. This avoids unmatched communication caused due to the following case: The parent node sends data to the child node in a time period 1 on a subchannel 2, but the child node waits, on the subchannel 2 in a time period 2 different from the time period 1, for receiving the data of the parent node and therefore cannot receive, in the time period 2, information sent by the parent node in the time period 1.

According to a fourth aspect, a channel resource coordinated allocation method is provided, where the method includes: sending, by a relay device (a child node), second channel allocation information to an access point AP (a parent node), where the relay device is one of one or more child nodes of the access point AP, the second channel allocation information includes indication information used to indicate a second time period on a subchannel, and the second time period is operation time of the relay device on the subchannel. The second channel allocation information is used by the access point AP to generate first channel allocation information based on the second channel allocation information. The first channel allocation information includes indication information used to indicate a first time period on the subchannel, and the first time period is operation time of the access point AP on the subchannel. The second time period includes the first time period. Through information exchange between the parent node and the child node, normal and matched communication between the parent node and the child node can be ensured. Therefore, channel coordinated utilization are implemented. This avoids unmatched communication caused due to the following case: The parent node sends data to the child node in a time period 1 on a subchannel 2, but the child node waits, on the subchannel 2 in a time period 2 different from the time period 1, for receiving the data of the parent node and therefore cannot receive, in the time period 2, information sent by the parent node in the time period 1.

In some possible implementations, operation time of the access point AP is a time period in which the access point may perform transmission or communication with another node different from the access point. For example, the access point AP may send information to a child node of the access point AP in the operation time, and may further receive, in the operation time, information sent by the child node of the access point AP.

In some possible implementations, operation time of the relay device is a time period in which the relay device may perform transmission or communication with another node different from the relay device. For example, the relay device may send information to a station associated with the relay device in the operation time, and may further receive, in the operation time, information sent by a station associated with the relay device.

In some possible implementations, the subchannel is an operating channel between the access point AP and the relay device, and the operating channel is a channel on which the access point AP and the relay device communicate with each other. In an example, the operating channel may be agreed upon through negotiation between the access point AP and the relay device.

In some possible implementations, the subchannel is one of a plurality of subchannels, and the second channel allocation information further includes indication information used to indicate a time period on another subchannel different from the subchannel in the plurality of subchannels, where the time period on the another subchannel is operation time of the relay device on the another subchannel and is different from the second time period. The second channel allocation information is sent, so that a child node or station associated with the relay device can obtain specific time periods and specific subchannels that can be used for communication with the relay device. Therefore, communication reliability is improved.

In some possible implementations, the operation time of the relay device includes the second time period and a time period on the another subchannel.

In some possible implementations, the operation time of the access point AP includes the first time period and a time period of the access point AP on the another subchannel different from the subchannel in the plurality of subchannels.

In some possible implementations, when duration of each time period in the operation time of the relay device is equal, the second channel allocation information further includes the duration of the time period in the operation time of the relay. Time periods of equal durations are allocated, and therefore signaling overheads for channel allocation information can be effectively reduced.

In some possible implementations, when durations of at least two time periods in the operation time of the relay device are unequal, the second channel allocation information further includes an end moment of each time period in the operation time of the relay device. Time periods with unequal durations are allocated, and therefore channel coordinated utilization can be more flexible.

In some possible implementations, the relay device may further send, to the access point AP, occupation information used to indicate a time period on a scheduled subchannel in a system. The scheduled subchannel includes at least the subchannel. The system includes the AP and a plurality of relay devices, and the relay device is one of the plurality of relay devices. Based on the occupation information, the access point AP can obtain a channel occupation status in the entire system. Therefore, the access point AP can select an unoccupied time period or a time period having a low occupation rate as the operation time of the relay device. This reduces collisions between channels allocated to nodes in the system.

According to a fifth aspect, a channel resource coordinated allocation apparatus is provided in this application. The apparatus may be a relay device (a child node), or may be a chip in a relay device (a child node). The apparatus has a function of performing embodiments related to the relay device in the foregoing aspects. The function may be implemented by hardware, or may be implemented by hardware executing corresponding software. The hardware or software includes one or more units corresponding to the foregoing functions.

In a possible design, when the apparatus is the relay device, the relay device includes a processing module and a transceiver module. The processing module may be, for example, a processor. The transceiver module may be, for example, a transceiver, and the transceiver may include a radio frequency circuit. Optionally, the relay device further includes a storage unit and the storage unit may be, for example, a memory. When the relay device includes the storage unit, the storage unit is configured to store a computer-executable instruction. The processing module is connected to the storage unit. The processing module executes the computer-executable instruction stored in the storage unit, to enable the relay device to perform the channel resource coordinated allocation method, in any one of the foregoing aspects, to which a function of the relay device is related.

The processor mentioned anywhere above may be a CPU, a microprocessor, an ASIC, or one or more integrated circuits configured to control program execution in the channel resource coordinated allocation method.

According to a sixth aspect, a computer storage medium is provided. The computer storage medium stores program code, and the program code is used to indicate an instruction of executing the method in any one of the first aspect to the fourth aspect or any possible implementation thereof.

Based on the foregoing solution, information is exchanged between the access point AP and the relay device, so that normal and matched communication can be performed between the access point AP and the relay device. Therefore, channel coordinated utilization is implemented.

### BRIEF DESCRIPTION OF DRAWINGS

To describe the embodiments of the present invention more clearly, the following briefly describes the accompanying drawings for describing the embodiments. It is clear that a person of ordinary skill in the art can further obtain other drawings based on these accompanying drawings without creative efforts.
FIG. 1 shows an example of an existing network structure;
FIG. 2 shows an example of an application scenario according to an embodiment of this application;
FIG. 3 is a schematic flowchart of a channel resource coordinated allocation method according to an embodiment of this application;
FIG. 4 is a schematic diagram of channel allocation according to an embodiment of this application;
FIG. 5 is a schematic structural diagram of a type of first channel allocation information according to an embodiment of this application;
FIG. 6 is a schematic structural diagram of another type of first channel allocation information according to an embodiment of this application;
FIG. 7 is a schematic structural diagram of still another type of first channel allocation information according to an embodiment of this application;
FIG. 8 is a schematic structural diagram of still another type of first channel allocation information according to an embodiment of this application;
FIG. 9 is a schematic flowchart of another channel resource coordinated allocation method according to an embodiment of this application;
FIG. 10 is a schematic structural diagram of a type of system channel occupation information according to an embodiment of this application;
FIG. 11 is a schematic structural diagram of another type of system channel occupation information according to an embodiment of this application;
FIG. 12 is a schematic structural diagram of still another type of system channel occupation information according to an embodiment of this application;
FIG. 13 is a schematic flowchart of still another channel resource coordinated allocation method according to an embodiment of this application;
FIG. 14 is a schematic flowchart of still another channel resource coordinated allocation method according to an embodiment of this application;
FIG. 15 is a schematic structural diagram of a channel resource coordinated allocation apparatus according to an embodiment of this application;
FIG. 16 is a schematic structural diagram of another channel resource coordinated allocation apparatus according to an embodiment of this application;
FIG. 17 is a schematic structural diagram of still another channel resource coordinated allocation apparatus according to an embodiment of this application; and
FIG. 18 is a schematic structural diagram of still another channel resource coordinated allocation apparatus according to an embodiment of this application.

### DESCRIPTION OF EMBODIMENTS

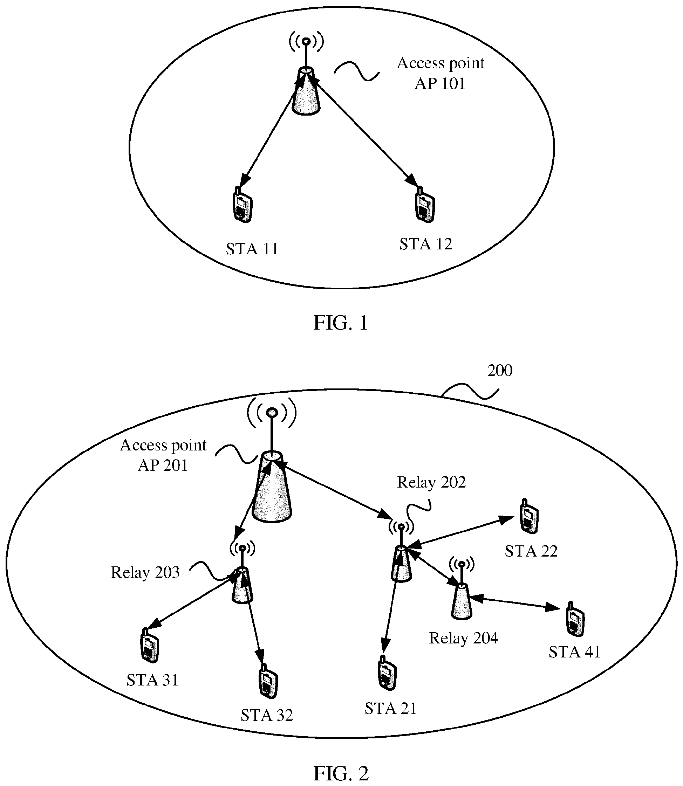

In the prior art, a subchannel selective transmission (subchannel selective transmission, SST for short) mechanism is defined in the 802.11ah protocol. Generally, subchannel selective transmission means that an access point AP may switch between a plurality of subchannels to serve stations associated with the subchannels. The subchannel selective transmission is usually applied to a narrowband transmission network. Narrowband communication is susceptible to channel shadow fading and cannot be performed for a long time. Therefore, a station for narrowband communication needs to select a subchannel with best communication quality, and switch to the subchannel to communicate with an access point AP. Therefore, the subchannel selective transmission mechanism is defined in the 802.11ah protocol, to support the AP in switching between a plurality of subchannels to serve a plurality of STAs having different optimal subchannels. The subchannel selective transmission mechanism may enable the station to implement the process under an instruction of the AP. The SST transmission may be applied to an application scenario shown in FIG. 1. As shown in FIG. 1, an access point AP 101 is associated with a plurality of stations. When the access point AP uses a subchannel selective transmission mechanism, the AP may switch between a plurality of subchannels to serve a plurality of stations (Station, STA for short), for example, a STA 11 and a STA 12 shown in FIG. 1, that require different optimal subchannels. However, in the subchannel selection transmission mechanism defined in the 802.11ah protocol, only channel coordination and utilization in the architecture shown in FIG. 1 is considered, but channel coordination and utilization in a relay (Relay) network architecture (relay architecture) shown in FIG. 2 is not considered. For example, in a relay network shown in FIG. 2, when an access point AP and a relay both need to switch between a plurality of subchannels to serve a plurality of stations, the following problem may be caused:

Channel utilization of the access point AP does not match that of the relay. For example, the AP communicates with the relay in a time period 1 on a subchannel 1 by using the SST mechanism, but the relay communicates with the access point AP in a time period 2 on the subchannel 1 by using the SST mechanism. As a result, the AP fails to communicate with the relay.

In view of this, an embodiment of this application provides a channel resource coordinated allocation method, to avoid a communication failure caused by unmatched channel utilization between an access point AP and a relay when the access point AP and the relay both need to switch between a plurality of subchannels to serve a plurality of stations.

FIG. 2 shows a network architecture of an example scenario according to an embodiment of this application. A communications system 200 shown in FIG. 2 is a relay network, and includes an access point AP 201, one or more parent relays (for example, relays 202 and 203), one or more child relays (for example, a relay 204), and one or more stations (station, STA for short). The parent relay may communicate with the access point AP and may further communicate with the child relay. The station STA is associated with the child relay and may communicate with the child relay. In addition, in the relay network, one child relay is connected to one parent relay or the AP, and one parent relay may be associated with a plurality of child relays. A frame that needs to be sent by the station to the access point AP may be forwarded to the access point AP via the relay, and a frame that needs to be sent by the access point AP to the station may also be forwarded to the station via the relay. It should be noted that the child relay may further be connected to a child relay at a lower layer. A quantity of access points APs, a quantity of relays, and a quantity of stations in the communications system 200 are merely examples. For ease of description, a four-layer network is used as an example in this embodiment of this application. To be specific, the four-layer network includes an access point AP, a parent relay, a child relay, and a station. However, this does not constitute a limitation on this embodiment of this application.

It should be noted that in this embodiment of this application, for ease of description, the parent relay may also be referred to as a parent node, the child relay may also be referred to as a child node, and a definition of the parent node is relative to a definition of the child node. Alternatively, the access point AP, the parent relay, and the child relay may be collectively referred to as nodes. For example, in FIG. 2, relative to the access point AP 201, the relay 202 is a child node of the access point AP 201, and the access point AP 201 is a parent node of the relay 202. Relative to the relay 204, the relay 202 is a parent node of the relay 204, and the relay 204 is a child node of the relay 202.

A person skilled in the art may understand that in the foregoing communications system 200, stations STAs in this application may be various user terminals, user apparatuses, access apparatuses, subscriber stations, subscriber units, mobile stations, user agents, or user equipments that each have a wireless communication function, or may have other names. The user terminals may include various handheld devices, vehicle-mounted devices, wearable devices, computing devices that each have a wireless communication function, or other processing devices connected to a wireless modem, and various forms of user equipments (User Equipment, UE for short), mobile stations (Mobile Station, MS for short), terminals (terminal), terminal equipments (Terminal Equipment), portable communications devices, handheld phones, portable computing devices, entertainment devices, game devices or systems, global positioning system devices, any other suitable devices configured to perform network communication through a wireless medium, or the like. The user terminals may further be internet of things stations (internet of things station, IoT STA for short) in an internet of things network. For ease of description, the devices mentioned above are collectively referred to as stations or STAs.

The access point AP and the relay relay in this application are apparatuses deployed in a wireless communications network to provide a wireless communication function for the station STA. The access point AP may serve as a hub in the communications system. The relay relay may serve as an intermediate device in the communications system. The access point AP and the relay relay may be base stations, routers, gateways, repeaters, communications servers, switches, bridges, or the like. The base stations may include various forms of macro base stations, micro base stations, relay stations, or the like.

Embodiments of this application provide a channel resource coordinated allocation method and a corresponding apparatus. According to the method and the apparatus, information is exchanged between a parent node and a child node, so that a time period occupied by the child node on an operating channel includes a time period occupied by the parent node on the channel. In this way, when the parent node and the child node both need to select a subchannel, time periods for communication of the child node and the parent node on the operating channel match each other. This avoids a communication failure that is caused when the parent node and the child node select different time periods on the operating channel.

It should be noted that, in a communications system, an operating channel may generally include a plurality of subchannels. When two devices communicate with each other, one or more subchannels may be selected for communication. Such selected subchannel used for communication may also be referred to as an operating channel. In an example, the operating channel is a selected subchannel having best communication quality or an optimal channel state.

In the embodiments of this application, channel occupation information of a node may be used to indicate operation time of the node on one or more subchannels. System channel occupation information may be used to indicate time period occupation information of a scheduled subchannel in an entire system. Some time periods on the scheduled subchannel may be occupied by one or more nodes in the system, but other time periods on the scheduled subchannel may not be occupied by any node.

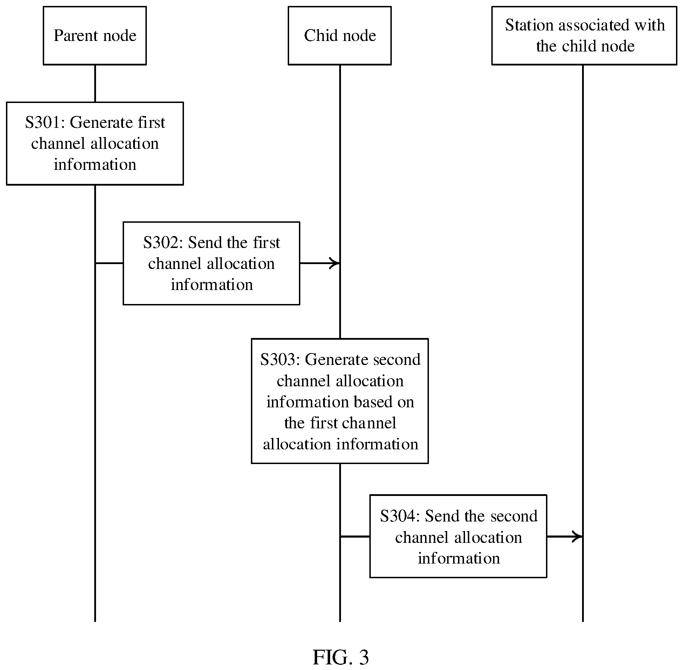

The following further describes the solutions of the embodiments of this application with reference to more accompanying drawings. FIG. 3 is a schematic flowchart of a channel resource coordinated allocation method according to an embodiment of this application. The method includes the following steps.

S301: A parent node generates first channel allocation information.

For example, in FIG. 2, the parent node may be the access point AP 201 or the parent relay 202 in the communications system 200. When the access point AP 201 is the parent node, the relays 202 and 203 are child nodes of the AP 201. When the relay 202 is the parent node, the relay 204 is a child node of the relay 202.

The first channel allocation information includes indication information used to indicate a first time period, and the first time period is operation time of the parent node on a subchannel.

For example, in FIG. 2, it is assumed that the parent node is the access point AP 201, child nodes are the relays 202, 203, and 204, and there are a total of eight subchannels in the system.

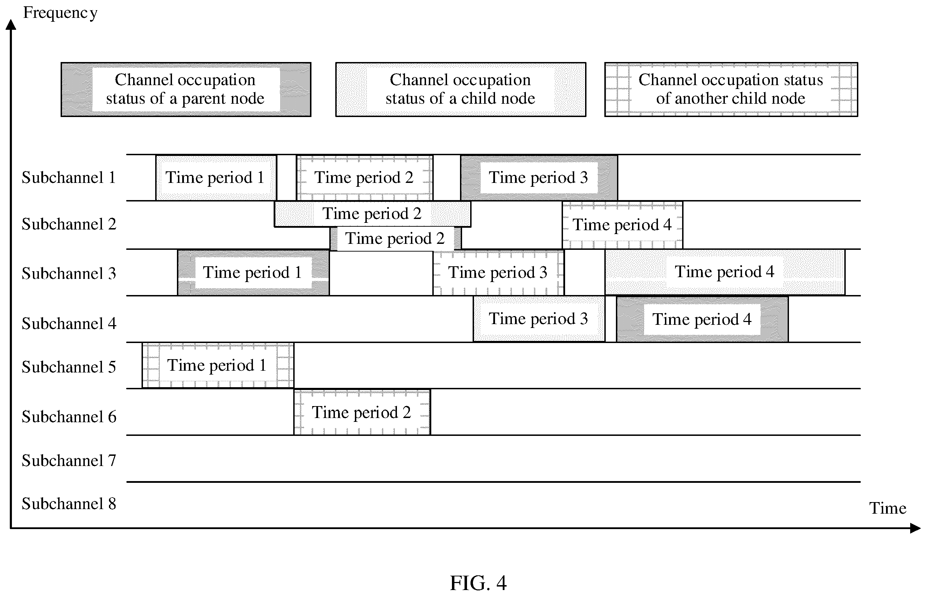

In an example, the first channel allocation information includes indication information of operation time of the parent node on an operating channel between the parent node and the child node (for example, the relay 203). For example, referring to FIG. 4, the operating channel between the parent node and the child node is a subchannel 2, operation time of the parent node on the subchannel 2 is a first time period, and the first time period is shown as a dark gray time period 2 in FIG. 4. In this case, the first channel allocation information generated by the AP 201 includes indication information used to indicate the time period 2 (for example, a dark gray block in FIG. 4) on the subchannel 2.

The first channel allocation information may further include indication information of operation time of the parent node on another subchannel. Referring to FIG. 4, operation time of the AP 201 on other subchannels includes a dark gray time period 1 on a subchannel 3, a time period 3 on a subchannel 1, and a time period 4 on a subchannel 4. In this case, the first channel allocation information generated by the AP 201 includes at least the indication information used to indicate the time period 2 (for example, the dark gray block in FIG. 4) on the subchannel 2. In addition, the first channel allocation information generated by the AP 201 may further include indication information used to indicate the dark gray time period 1 on the subchannel 3, the time period 3 on the subchannel 1, and the time period 4 on the subchannel 4. In this case, a channel occupation status of the AP 201 is the time period 2 (for example, the dark gray block in FIG. 4) on the subchannel 2, the dark gray time period 1 on the subchannel 3, the time period 3 on the subchannel 1, and the time period 4 on the subchannel 4.

It should be noted that a subchannel (for example, the subchannel 2) for communication between the child node (for example, the relay 203) and the parent node (for example, the AP 201) may be agreed on in a protocol. Alternatively, before sending the channel allocation information, the parent node may determine a subchannel for communicating with the child node and then notify the child node of the determined subchannel. Alternatively, before receiving the channel allocation information, the child node may determine a subchannel for communicating with the parent node and then report the determined subchannel to the parent node.

It should be noted that operation time of a node on a channel means that the node may communicate, in the time period on the channel, with a node or station associated with the node. If the parent node is the AP 201 in FIG. 2, operation time periods of the AP 201 are shown as dark gray blocks in FIG. 4. In this case, the AP 201 may perform data transmission with the child node (for example, the relay 203, 202, or 201) in the time period 2 (for example, the dark gray block in FIG. 4) on the subchannel 2, the time period 1 on the subchannel 3, the time period 3 on the subchannel 1, and the time period 4 on the subchannel 4.

S302: The parent node sends the first channel allocation information to the child node.

The parent node sends the first channel allocation information to the child node, so that the child node determines second channel allocation information based on the first channel allocation information.

For example, in FIG. 2, it is assumed that the parent node is the access point AP 201 and the child node is the relay 203. The AP 201 sends the first channel allocation information to the relay 203. After receiving the first channel allocation information, the relay 203 determines that the operation time of the AP 201 on the subchannel 2 is the dark gray time period 2. If the subchannel 2 is determined as the operating channel through previous negotiation, the relay 203 may communicate with the AP 201 in the dark gray time period 2 on the subchannel 2.

S303: The child node generates the second channel allocation information based on the first channel allocation information.

The second channel allocation information includes indication information used to indicate a second time period in which a second device communicates with a child node of the second device on the subchannel. To ensure that the child node can also communicate with the parent node on the subchannel when the parent node communicates with the child node in the first time period on the subchannel, the second time period includes the first time period. It should be noted that, that the second time period includes the first time period may be understood as follows: A start moment and an end moment of the first time period fall within a time period ranging from a start moment to an end moment of the second time period. For example, the start moment and the end moment of the second time period are T1 and T2 respectively, and a time period ranging from T1 to T2 is [T1, T2]. The start moment and the end moment of the first time period are T3 and T4 respectively and satisfy: T1 ≤ T3 ≤ T2 and T1 ≤ T4 ≤ T2 respectively.

For example, in FIG. 4, after receiving the first channel allocation information sent by the access point AP 201, the relay 203 determines that the operation time of the AP 201 on the subchannel 2 is the dark gray time period 2. If the subchannel is determined as the operating channel through previous negotiation, the relay 203 may communicate with the AP 201 in the time period 2 on the subchannel 2. Further, to normally communicate with the AP 201, the relay 203 may communicate with the AP 201 in a light gray time period 2 shown in FIG. 4 on the subchannel 2. The light gray time period 2 includes the dark gray time period 2. Therefore, the child node is always on the subchannel 2 throughout the time period 2 when the parent node needs to communicate with the child node, for example, when the parent node needs to send a data frame to the child node. In this way, the child node can receive the data frame. This ensures matched communication between the parent node and the child node. In this case, the second channel allocation information generated by the relay 203 includes indication information used to indicate the time period 2 (for example, a light gray block in FIG. 4) on the subchannel 2.

Optionally, the second channel allocation information may further include indication information used to indicate operation time of the child node on another subchannel. The operation time of the child node on the another subchannel is different from the second time period. For example, in FIG. 4, operation time of the relay 203 on the subchannel 2 includes at least the light gray time period 2. The operation time of the relay 203 may further include a time period 1 on the subchannel 1, a time period 3 on the subchannel 4, and a time period 4 on the subchannel 3. In other words, stations (such as STAs 31 and 32) associated with the relay 203 can communicate with the relay 203 in the operation time of the relay 203. In this case, the second channel allocation information generated by the relay 203 includes the indication information used to indicate the light gray time period 2 on the subchannel 2 shown in FIG. 4, and may further include indication information used to indicate the time period 1 on the subchannel 1, the time period 3 on the subchannel 4, and the time period 4 on the subchannel 3.

The first channel allocation information may be a subchannel selective transmission element SST element, an RPS element, or another information element.

S304: The child node sends the second channel allocation information to a station associated with the child node.

Similarly, the second channel allocation information may alternatively be a field included in a management frame. For example, the second channel allocation information is an element included in a beacon frame. For another example, the second channel allocation information may alternatively be included in a new frame.

For example, in FIG. 2, the relay 203 sends the second channel allocation information to the stations, such as the STAs 31 and 32, that are associated with the relay 203. Based on the second channel allocation information, the STAs 31 and 32 may learn that the STAs 31 and 32 can communicate with the relay 203 in the time period 1 on the subchannel 1, the time period 3 on the subchannel 4, and the time period 4 on the subchannel 3. In this way, subchannel selective transmission is implemented.

For the first channel allocation information mentioned above, there may be the following three cases:
(1) When the parent node (for example, the access point AP 201) selects a subchannel and the subchannel is not occupied by any child node, the parent node may send channel occupation information of the parent node to the child node based on the first channel allocation information.
(2) Before the parent node (AP 201) performs subchannel selective transmission, one child node (for example, the relay 202) has performed subchannel selective transmission and fed back channel occupation information of the child node to the parent node. In this case, the parent node may generate the first channel allocation information based on the channel occupation information fed back to the parent node by the relay 202.
(3) Before the access point AP 201 generates the first channel allocation information, a plurality of child nodes (for example, the relays 202, 203, and 204 in FIG. 2) have fed back respective channel allocation statuses to the parent node. In this case, the parent node may generate the first channel allocation information for one (for example, the relay 203) of the plurality of child nodes based on channel occupation information fed back by the plurality of child nodes.

In this embodiment of this application, indication information used to indicate operation time of the parent node on a subchannel may be referred to as channel occupation information of the parent node. For example, the access point AP 201 may send a beacon frame to the relay 203, where the beacon frame may carry channel occupation information of the access point AP, that is, the first channel allocation information. Dark gray blocks in FIG. 4 are used as examples to describe a channel occupation status of the parent node. Occupation information of the parent node indicates that the parent node occupies the time period 1 on the subchannel 3, the time period 2 on the subchannel 2, the time period 3 on the subchannel 1, and the time period 4 on the subchannel 4, and that the parent node can communicate with a node associated with the parent node in the time periods.

The channel occupation information of the parent node may include a time offset, a time period quantity identifier, and a subchannel identifier.

The time offset is used to indicate a start moment of a time period with an earliest start moment in the operation time of the parent node. For example, the time offset may indicate a start moment of the 1st time period, or may be a time offset of a start moment of the 1st time period relative to an end moment of a frame carrying the channel occupation information of the parent node. For example, referring to FIG. 4, the time offset may indicate a start moment of the time period 1 on the subchannel 3, or may be an offset of a start moment of the time period 1 on the subchannel 3 relative to an end moment of a frame carrying the first channel allocation information. It should be noted that the 1st time period refers to a time period with an earliest start moment.

The time period quantity identifier is used to indicate a quantity of time periods in the operation time of the parent node. For example, referring to FIG. 4, the parent node occupies four time periods.

The subchannel identifier is used to indicate a subchannel corresponding to each time period in the operation time of the parent node. For example, referring to FIG. 4, subchannels corresponding to the four time periods included in the operation time of the parent node are the subchannel 3, the subchannel 2, the subchannel 1, and the subchannel 4. Therefore, the first channel allocation information may further include identifiers of the four subchannels, and the identifiers of the four subchannels one-to-one correspond to the four time periods.

The operation time of the parent node includes at least the first time period, for example, the dark gray time period 2 on the subchannel 2 in FIG. 4. The operation time of the parent node may further include operation time periods of the parent node on another subchannels, for example, the dark gray time period 1 on the subchannel 3, the dark gray time period 3 on the subchannel 1, and the dark gray time period 4 on the subchannel 4 that are shown in FIG. 4.

When duration of each time period in the operation time of the parent node is equal, the first channel allocation information further includes the duration of the time period in the operation time of the parent node. By allocating time periods with equal duration, signaling overheads for channel allocation information can be effectively reduced.

In an example, when durations of at least two time periods in the operation time of the parent node are unequal, the first channel allocation information further includes an end moment of each time period in the operation time of the parent node. For another example, the first channel allocation information may further include a duration of each time period in operation time periods of the parent node. By allocating time periods with unequal durations, coordinated utilization of channel can be more flexible.

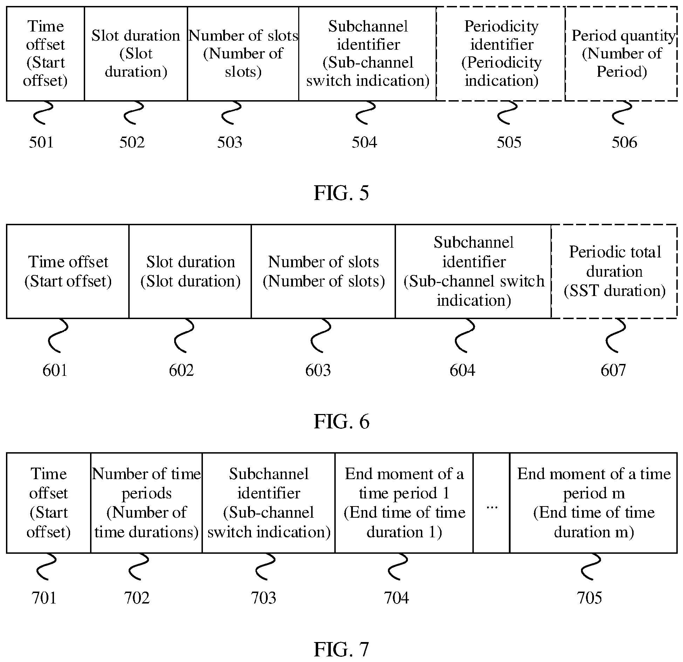

FIG. 5 shows an example of a data structure of the first channel allocation information according to an embodiment of this application. When duration of each time period in the operation time of a parent node is equal, the first channel allocation information may include a time offset field 501, a slot duration field 502, number of slots field 503, and a subchannel identifier field 504.

The time offset field 501 is used to indicate a start moment of the 1st time period in the operation time of the parent node. The 1st time period is a time period with an earliest start moment. For example, referring to FIG. 4, a time offset may indicate a start moment of the time period 1 on the subchannel 3, or may be an offset of a start moment of the time period 1 on the subchannel 3 relative to an end moment of a frame carrying the first channel allocation information.

The slot duration field 502 is used to indicate a duration of a time period in the operation time of the parent node. For example, in FIG. 4, if a duration of each of time periods 1, 2, 3, and 4 is 2 ms, the slot duration field 502 indicates 2 ms.

The number of slots field 503 is used to indicate a quantity of time periods in the operation time of the parent node. For example, as shown in FIG. 4, the parent node occupies four time periods.

The subchannel identifier field 504 is used to indicate a subchannel corresponding to each time period in the operation time of the parent node, and subchannels indicated by the subchannel identifier field are in a one-to-one correspondence with time periods. The subchannel identifier field includes subfields or segment bits having a same quantity as the subchannels. One subfield is used to indicate one subchannel, and an order of the subfields corresponds to an order of the operation time periods. FIG. 4 is used as an example. A first subfield indicates the subchannel 3, a second subfield indicates the subchannel 2, a third subfield indicates the subchannel 1, and a fourth subfield indicates the subchannel 4.

In an example, the subfield may be a bitmap, and merely one bit takes a different value from other bits in the bitmap. In this case, a location of the bit with the different value indicates a subchannel. For example, in FIG. 4, operating channels in a system include eight subchannels, and the parent node occupies four subchannels. In this case, an 8-bit bitmap may be used to indicate a subchannel. In the subchannel identifier field, a value 00100000 of the first subfield indicates the subchannel 3, corresponding to the time period 1; a value 01000000 of the second subfield indicates the subchannel 2, corresponding to the time period 2; a value 10000000 of the third subfield indicates the subchannel 1, corresponding to the time period 1; and a value 00010000 of the fourth subfield indicates the subchannel 4, corresponding to the time period 4. It may be understood that a bitmap 01111111 may be further used herein to indicate the subchannel 1, and a bitmap 11011111 may be used to indicate the subchannel 3. This is not specifically limited in this embodiment of this application.

For another example, the subfield of the subchannel identifier field 504 may be a subchannel identifier. For example, in FIG. 4, operating channels in a system include eight subchannels, and the parent node occupies four subchannels. In this case, every 3 bits in the subfield may be used to indicate one subchannel. A value 011 of the first subfield may be used to indicate the subchannel 3, corresponding to the time period 1; a value 010 of the second subfield is used to indicate the subchannel 2, corresponding to the time period 2; a value 001 of the third subfield may be used to indicate the subchannel 1, corresponding to the time period 3; and a value 100 of the fourth subfield is used to indicate the subchannel 4, corresponding to the time period 4.

Optionally, the first channel allocation information may further include a periodicity identifier field 505, used to indicate whether a subchannel and a time period that are occupied by the parent node are periodic. In an example, when a periodicity identifier indicates that periodicity exists, the first channel allocation information may further include a period quantity identifier field 506 used to indicate a quantity of periods. In this case, time period allocation information on subchannels that is included in the first channel allocation information applies to the indicated periods. When the periodicity identifier indicates that periodicity does not exist, it means that the channel allocation information is valid only in one period. In this case, the period quantity identifier field may not be included. For example, 1 bit may be used to indicate periodicity. When a value of the bit is 0, it indicates that periodicity does not exist. When indication of the bit is 1, it indicates that periodicity exists. In this case, when the period quantity identifier field indicates a quantity of 3 periods, it means that a subchannel and a time period occupied by the parent node in each of a second period and a third period are the same as those occupied in the first period. It may be understood that a meaning corresponding to the value of the bit is replaceable. This is not specifically limited in this embodiment of this application. In another example, when the periodicity identifier indicates that periodicity exists, the first allocation information may alternatively not include the period quantity identifier. For example, the periodicity identifier includes a plurality of bits, for example, 2 bits. When a value of the periodicity identifier field is 00, it may indicate that periodicity does not exist. When the value of the periodicity identifier field is greater than 0, for example, is 10, it may indicate a quantity of 3 periods.

In still another embodiment of this application, FIG. 4 is used as an example. When durations of the time period 1, the time period 2, the time period 3, and the time period 4 that are included in the operation time of the parent node are equal, a schematic diagram of a data structure of the first channel allocation information may be further shown in FIG. 6. A time offset 601, a slot duration 602, number of slots 603, and a subchannel identifier field 604 are similar to those in FIG. 5, and details are not described herein again. Different from that in FIG. 5, the first channel allocation information in FIG. 6 may optionally include a periodic total duration field 607, used to indicate a period total duration. When the period total duration is greater than a product of a duration indicated by a slot duration field and number of slots indicated by number of slots field, it indicates that periodicity exists, and the period total duration is indicated by the periodic total duration field. When the period total duration is equal to the product of the duration indicated by the slot duration field and the number of slots indicated by the number of slots field, it indicates that periodicity does not exist. For example, when a slot duration indicated by the slot duration field is 2 ms, the number of slots indicated by the number of slots field is 4, and the period total duration indicated by the periodic total duration field is 16 ms, it indicates that periodicity exists, two periods are included, and the period total duration is 16 ms.

In this embodiment of this application, duration allocated for each time periods based on the first channel allocation information is equal. In other words, slots of equal durations are allocated by the parent node. In this way, an information amount in the first channel allocation information and signaling overheads are reduced.

FIG. 7 shows an example data structure of still another type of first channel allocation information according to an embodiment of this application. For example, in FIG. 4, when durations of any two of the time period 1, the time period 2, the time period 3, and the time period 4 that are included in the operation time of the parent node are equal, the first channel allocation information may include a time offset field 701, a time period quantity field 702, and a subchannel identifier field 703.

The time offset field 701, the time period quantity field 702, and the subchannel identifier field 703 are similar to those included in the data structure of the first channel allocation information shown in FIG. 5. Details are not described herein again. The first channel allocation information further includes an end moment field of each time period. For example, a first end moment field 704 indicates an end moment of the time period 1.

In an example, the subchannel identifier field 703 may be similar to the subchannel identifier field 504 in FIG. 5, or may be implemented in a form of centralized indication, for example, as shown in FIG. 7. Details are not described herein again.

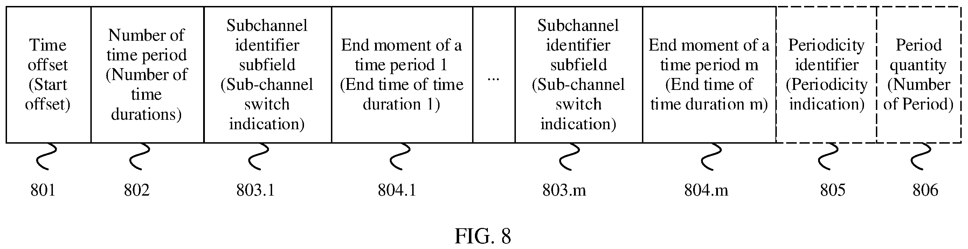

In another example, the subchannel identifier field 703 may alternatively be implemented in a form of a distributed indication. For example, as shown in FIG. 8, the first channel allocation information further includes a subchannel identifier subfield before (as shown in FIG. 8) or after (not shown in FIG. 8) the end moment field of each time period. A subchannel indicated by the subchannel identifier subfield corresponds to an end moment field after (as shown in FIG. 8) or before (not shown in FIG. 8) the subchannel identifier subfield. A first subchannel identifier subfield 803.1 and a first end moment field 804.1 are used as examples for description. When the first subchannel identifier subfield 803.1 indicates the subchannel 3, the first end moment field 804.1 indicates an end moment of the time period 1 on the subchannel 3, and an m^{th} subchannel identifier field corresponds to an end moment of an m^{th} time period.

Optionally, the first channel allocation information may further include a periodicity identifier 805, used to indicate whether a subchannel and a time period that are occupied by the parent node are cyclic. In an example, the periodicity identifier 805 may be similar to the periodicity identifier field 505 described above. Details are not described herein again. In still another example, the periodicity identifier 805 may be similar to the periodic total duration field 507 described above. It should be noted that, when a period total duration indicated by the periodic total duration field is greater than a sum of durations of all time periods, periodicity exists. When the period total duration indicated by the periodic total duration field is equal to the sum of durations of all time periods, periodicity does not exist.

In this embodiment of this application, durations that are of time periods and that are included in the first channel allocation information can be unequal. In this way, channel utilization of the parent node and the child node can be more flexible.

Optionally, the first channel allocation information may be a field included in a management frame. For example, the first channel allocation information is an element included in a beacon frame. For another example, the first channel allocation information may alternatively be included in a new frame.

After receiving the channel occupation information of the parent node, the child node determines, based on the channel occupation information of the parent node, a specific time period that is on a specific subchannel and in which the parent node communicates with the child node. Then, the child node allocates a subchannel and a time period for communication between the child node and a station associated with the child node, and generates channel occupation information of the child node, that is, the second channel allocation information.

Similar to the first channel allocation information in step 301, the second channel allocation information generated by the child node includes: indication information used to indicate a second time period on the subchannel, where the second time period is operation time of the child node on the subchannel; and indication information used to indicate operation time of the child node on other subchannels. The indication information used to indicate the second time period on the subchannel and the indication information used to indicate the operation time of the child node on the other subchannels may be referred to as channel occupation information of the child node. For example, light gray blocks in FIG. 4 are used as examples to describe a channel occupation status of the child node. Occupation information of the child node indicates that operation time of the child node includes the time period 1 on the subchannel 1, the time period 2 on the subchannel 2, the time period 3 on the subchannel 4, and the time period 4 on the subchannel 3. The parent node (for example, the AP 201) may communicate with the child node (for example, the relay 203) in the dark gray time period 2, on the subchannel 1, allocated by the parent node. After obtaining the channel occupation information of the child node, stations (for example, the STAs 31 and 32) associated with the child node may communicate with the child node in the time period 1 on the subchannel 1, the time period 3 on the subchannel 4, and the time period 4 on the subchannel 3 that are allocated by the child node.

The channel occupation information of the child node may include a time offset, a time period quantity identifier, and a subchannel identifier.

The time offset is used to indicate a start moment of the 1st time period in the operation time of the child node, and may further be used to indicate an offset of a start moment of the 1st time period in all time periods relative to an end moment of a frame carrying the second channel allocation information. For example, referring to FIG. 4, the time offset may indicate a start moment of the time period 1 on the subchannel 1.

The time period quantity identifier is used to indicate a quantity of time periods in the operation time of the child node. For example, referring to FIG. 4, the operation time of the child node includes four time periods.

The subchannel identifier is used to indicate a subchannel corresponding to each time period in the operation time of the child node. For example, referring to FIG. 4, subchannels corresponding to the four time periods included in the operation time of the child node are the subchannel 1, the subchannel 2, the subchannel 4, and the subchannel 3. Therefore, the second channel allocation information may further include identifiers of the four subchannels.

All time periods occupied by the child node may include time periods (such as the time period 1, the time period 3, and the time period 4) in which the child node operates on the other subchannels and the second time period (for example, the light gray time period 2 in FIG. 4).

When duration of each time period in the operation time of the child node is equal, the second channel allocation information further includes the duration of the time period in the operation time of the child node. When durations of at least two time periods in the operation time of the child node are unequal, the second channel allocation information further includes an end moment of each time period in the operation time of the child node.

The subchannel identifier included in the second channel allocation information is in a one-to-one correspondence with the time period occupied by the child node.

When duration of each time period in the operation time of the child node is equal, a frame structure of the second channel allocation information is similar to that of the first channel allocation information, or may be as shown in FIG. 5 or FIG. 6. Details are not described herein again.

When durations of any two time periods in the operation time of the child node are equal, a frame structure of the second channel allocation information is similar to that of the first channel allocation information, or may be as shown in FIG. 7 or FIG. 8. Details are not described herein again.

Therefore, after receiving the first channel allocation information, the child node may determine that operation time of the parent node on an operating channel between the parent node and the child node is the first time period. Then, the child node may determine that the child node may communicate with the parent node in the first time period. In this case, operation time of the child node on the operating channel, namely, the second time period includes the first time period, to ensure normal communication between the parent node and the child node when the parent node operates in the first time period. For example, as shown in FIG. 4, the subchannel 2 is the operating channel between the parent node and the child node, operation time of the parent node on the subchannel 2 is the dark gray time period 2, and operation time of the child node on the operating channel 2 is the light gray time period 2. In this case, when the parent node sends data to the child node in the dark gray time period 2 on the subchannel 2, the child node can receive the data in a matched time period. This avoids a case in which the parent node and the child node cannot communicate with each other because the parent node communicates with the child node in the time period 2 on the subchannel 2 but the child node operates in the time period 3 on the subchannel 2 and therefore cannot receive data sent by the parent node in the time period 2 on the subchannel 2.

According to the solution in this embodiment of this application, normal and matched communication can be performed between the parent node and the child node. This avoids the following case: The parent node allocates a time period A on the subchannel 2 for communication with the child node, but the child node allocates a time period B on the subchannel 2 for communication with the parent node, and therefore the time period A does not match the time period B and the parent node and the child node cannot communicate with each other.

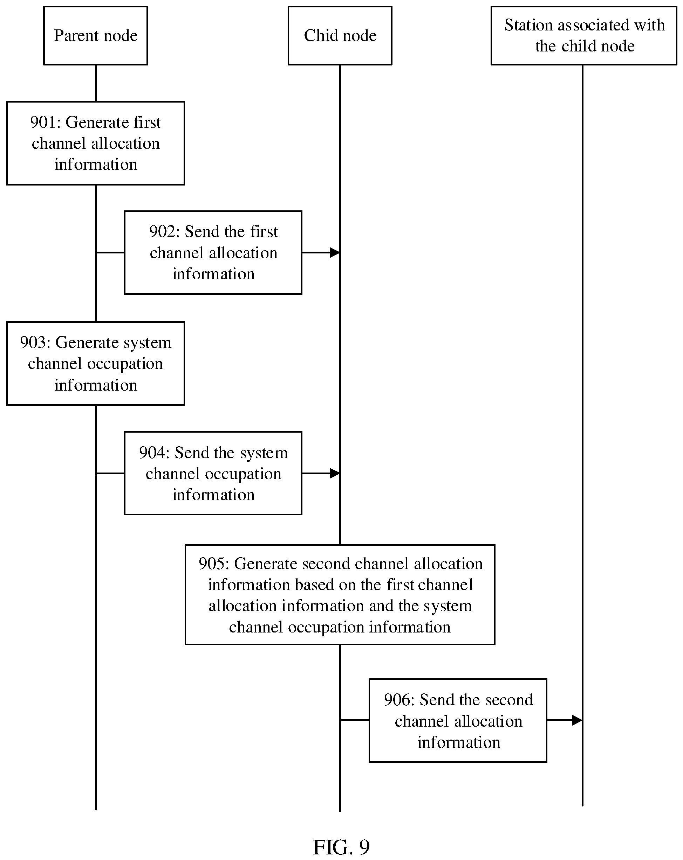

FIG. 9 is a schematic flowchart of a channel resource coordinated scheduling method according to an embodiment of this application. Different from the foregoing embodiment, in this embodiment of this application, a parent node may further send system channel occupation information to a child node, to indicate occupation information of a time period on a scheduled subchannel in a system. The child node determines second channel allocation information based on the system channel occupation information. The method includes the following steps.

S901: The parent node generates first channel allocation information.

This step is similar to step S301, and details are not described herein again.

S902: The parent node sends the first channel allocation information to the child node.

This step is similar to step S902, and details are not described herein again.

S903: The parent node generates the system channel occupation information.

Specifically, the system channel occupation information may include occupation information used to indicate a time period on the scheduled subchannel in the system. The system channel occupation information is used for the child node to select an unoccupied time period on a subchannel or a time period having a relatively low occupation rate on a subchannel, for communication with a station associated with the child node.

In a first case, before generating the system channel occupation information, the parent node does not receive channel occupation information of any other child node fed back by the any other child node. In this case, occupied time periods in the system include operation time (which, for example, is shown as dark gray blocks in FIG. 4) of the parent node on subchannels. Therefore, the system channel occupation information includes information used to indicate an occupation status of the operation time of the parent node on the subchannels.

In a second case, before generating the system channel occupation information, the parent node further receives channel occupation information of other child nodes fed back by the other child nodes. In this case, the parent node generates the system channel occupation information based on the channel occupation information of the child nodes. Operation time occupied on channels in the system includes operation time (which, for example, is shown as dark gray blocks in FIG. 4) of the parent node on the subchannels and operation time (which, for example, is shown as grid blocks in FIG. 4) of the other child nodes (which exclude the parent node) on the subchannels. An example in which the parent node in FIG. 2 is the access point AP 201 is used. After receiving channel occupation information of child nodes (for example, the relays 202 and 204), the AP 201 may obtain a channel occupation status in a current system through summarization. FIG. 4 is used as an example. The relay 202 feeds back that the relay 202 occupies a time period 1 on a subchannel 5, a time period 2 on the subchannel 1, and a time period 4 on the subchannel 2. The relay 204 feeds back that the relay 204 occupies the time period 1 on the subchannel 5, a time period 2 on a subchannel 6, a time period 3 on the subchannel 3, and the time period 4 on the subchannel 2. In this case, the operation time occupied by the other child nodes (which exclude the parent node) on the subchannels in a system channel occupation status includes the time period 1 on the subchannel 5, the time period 2 on the subchannel 1, the time period 2 on the subchannel 6, the time period 3 on the subchannel 3, and the time period 4 on the subchannel 2. The operation time of the parent node on the subchannels in the system channel occupation status includes the time period 1 on the subchannel 3, the dark gray time period 2 on the subchannel 2, the time period 3 on the subchannel 1, and the time period 4 on the subchannel 4. Therefore, scheduled subchannels in the system include subchannels 1, 2, 3, 4, 5, and 6, and system channel occupation information generated by the AP 201 includes occupation information used to indicate occupation information of time periods on the subchannels 1, 2, 3, 4, 5, and 6.

In addition, the AP 201 may learn that the time period 2 on the subchannel 1 is occupied by one basic service set, the time period 2 and the time period 3 on the subchannel 1 each are occupied by only one basic service set, the time period 2 on the subchannel 2 is occupied by one basic service set, the time period 4 on the subchannel 2 is occupied by two basic service sets, the time period 1 and the time period 3 on the subchannel 3 each are occupied by one basic service set, the time period 4 on the subchannel 4 is occupied by one basic service set, the time period 1 on the subchannel 5 is occupied by two basic service sets, and the time period 2 on the subchannel 6 is occupied by one basic service set.

Therefore, in the two cases, the system channel occupation information may include a time offset, a time period quantity identifier, a subchannel identifier, and a subchannel time period occupation identifier.

The time offset is used to indicate a start moment of a time period with an earliest start moment in operation time on the scheduled subchannel in the system, or is used to indicate a time offset of a start moment of a time period with an earliest start moment in operation time on the scheduled subchannel in the system relative to an end moment of a frame carrying the system channel occupation information. For example, referring to FIG. 4, the time offset may indicate a start moment of the time period 1 on the subchannel 5, or may be an offset of a start moment of the time period 1 on the subchannel 5 relative to an end moment of a frame carrying the system channel occupation information.

The time period quantity identifier is used to indicate a quantity of time periods scheduled on a subchannel. For example, referring to FIG. 4, four time periods are scheduled on each subchannel.

The subchannel identifier is used to indicate each of the scheduled subchannel. For example, referring to FIG. 4, scheduled subchannels in the system include the subchannels 1, 2, 3, 4, 5, and 6. Therefore, the system channel occupation information includes identifiers of the six subchannels.

In an example, the subchannel time period occupation identifier may be used to indicate whether each time period in the operation time on the scheduled subchannel is occupied. In another example, the subchannel time period occupation identifier may be used to indicate a quantity of basic service sets that occupy each time period in the operation time on the scheduled subchannel. For example, referring to FIG. 4, the second case is used as an example. To be specific, channel occupation statuses of the relays 202 and 204 fed back by the relays 202 and 204 are combined with a channel occupation status of the AP. In this case, the subchannel time period occupation identifier generated by the AP 201 may indicate that the time period 2 on the subchannel 1 is occupied by two basic service sets, the time period 2 and the time period 3 on the subchannel 1 each are occupied by only one basic service set, the time period 2 on the subchannel 2 is occupied by one basic service set, the time period 4 on the subchannel 2 is occupied by two basic service sets, the time period 1 and the time period 3 on the subchannel 3 each are occupied by one basic service set, the time period 4 on the subchannel 4 is occupied by one basic service set, the time period 1 on the subchannel 5 is occupied by two basic service sets, and the time period 2 on the subchannel 6 is occupied by one basic service set.

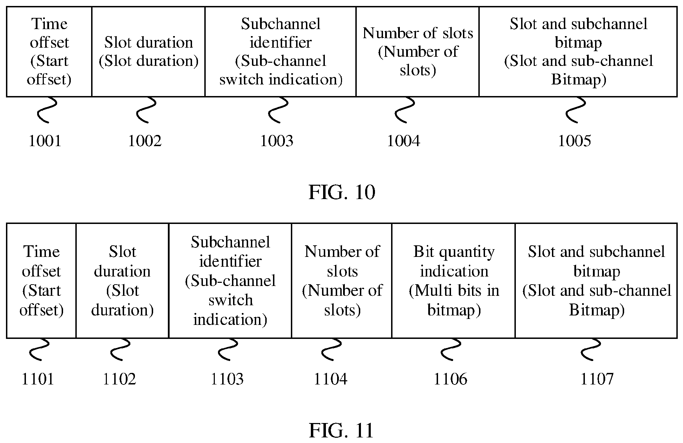

FIG. 10 is a schematic diagram of an example frame structure of system channel occupation information according to an embodiment of this application. When durations of time periods included in operation time on a scheduled subchannel in a system are equal, the time periods can be referred to as slots. In this case, the system channel occupation information may include:
a time offset field 1001 (which may be similar to the time offset field 501), a slot duration field 1002 (which may be similar to the slot duration field 502), and number of slots field 1004 (which may be similar to the number of slots field 503). Details are not described herein again.

Further, the system channel occupation information includes a subchannel identifier field 1003. In an example, the subchannel identifier field 1003 may be similar to the subchannel identifier field 504, and details are not described herein again. In another example, the subchannel identifier field 1003 may alternatively be implemented by using a bitmap, where each bit in the bitmap correspondingly indicates whether a subchannel is scheduled.

The system channel occupation information may further include a slot and subchannel occupation identifier 1005, used to indicate whether each slot on each subchannel is occupied.

For ease of description, the system channel occupation status in the second case shown in FIG. 4 is used as an example for description. The entire system includes a total of eight subchannels. Six of the subchannels are scheduled, namely, the subchannels 1, 2, 3, 4, 5, and 6. The time period 2 and the time period 3 on the subchannel 1 are occupied; the time period 4 on the subchannel 2 is occupied; the time period 3 on the subchannel 3 is occupied; the time period 4 on the subchannel 4 is occupied; the time period 1 on the subchannel 5 is occupied; and the time period 2 on the subchannel 6 is occupied. Correspondingly, the number of slots field 1004 indicates that four slots are available on the subchannel. In a possible implementation, an 8-bit bitmap may be used for the subchannel identifier field 1003, and each bit taking a value of 1 may correspond to the scheduled subchannel. For example, the 8-bit bitmap may take a value of 11111100, to indicate that the subchannels 1, 2, 3, 4, 5, and 6 are scheduled. It may be understood that, a value of each bit in the 8-bit bitmap may further be set to 0 to indicate the scheduled subchannel. In this case, the 8-bit bitmap taking a value of 00000011 may indicate that the subchannels 1, 2, 3, 4, 5, and 6 are scheduled. In a possible implementation, a bitmap including 24 bits may be used for the slot and subchannel occupation identifier 1005, to indicate occupation statuses of four slots on six subchannels. For example, as shown in Table 1, a value of 1 may indicate that a corresponding slot on a subchannel is occupied, and a value of 0 may indicate that a corresponding slot on a subchannel is not occupied. In an example, the subchannel and slot occupation identifier 1005 may be used for identification first based on a subchannel. To be specific, first 4 bits indicate occupation of a specific slot on the subchannel 1. For example, in the following table, 4 bits corresponding to the subchannel 1 take a value of 0110, indicating that a slot 2 (the time period 2) and a slot 3 on the subchannel are occupied. Second 4 bits indicate occupation of a specific slot on the subchannel 2. By analogy, the subchannel and slot occupation identifier takes a value of 011001011010000110000100. In another example, the subchannel and slot occupation identifier 1005 may be used for identification first based on a slot. To be specific, first 6 bits indicate occupation of a specific subchannel corresponding to a slot 1. For example, first 6 bits takes a value of 001010, indicating that a slot 1 (the time period 1) on the subchannel 3 and a slot 1 on the subchannel 6 are occupied. Second 6 bits indicate occupation of a slot 2 on a specific subchannel. By analogy, the subchannel and slot occupation identifier may take a value of 001010110001101000010100.

It may be understood that meanings of a value 1 and a value 0 for a bit corresponding to an occupation status of a slot corresponding to a subchannel in Table 1 are replaceable. This is not specifically limited in this embodiment of this application.

**Table 1**

| | Slot 1 | Slot 2 | Slot 3 | Slot 4 |
|---|---|---|---|---|
| Subchannel 1 | 0 | 1 | 1 | 0 |
| Subchannel 2 | 0 | 1 | 0 | 1 |
| Subchannel 3 | 1 | 0 | 1 | 0 |
| Subchannel 4 | 0 | 0 | 0 | 1 |
| Subchannel 5 | 1 | 0 | 0 | 0 |
| Subchannel 6 | 0 | 1 | 0 | 0 |

FIG. 11 shows another example frame structure of the system channel occupation information when durations of time periods occupied by nodes in the entire system are the same, for example, the time periods are slots with same slot durations. Similar to the example data structure shown in FIG. 10, the system channel occupation information includes a time offset field 1101 (which may be similar to the time offset field 501), a slot duration field 1102 (which may be similar to the slot duration field 502), number of slots field 1104 (which may be similar to the number of slots field 503), a subchannel identifier field 1103 (which is similar to the subchannel identifier field 1003 in FIG. 10), and a slot and subchannel occupation identifier 1107. Details are not described herein again.

Different from the example data structure shown in FIG. 10, the system channel occupation information further includes a bit quantity indication field 1106. A value indicated by the bit quantity indication field 1106 plus 1 equals to a quantity of bits used to indicate an occupation status of one slot on one subchannel. For example, when the bit quantity indication field 1106 indicates 0, it means that 1 bit is used to indicate the occupation status of one slot on one subchannel, which is similar to an indication manner in FIG. 10. When the bit quantity indication field 1106 indicates 1, it means that 2 bits are used to indicate the occupation status of one slot on one subchannel. In this case, a quantity of bits for the slot and subchannel occupation identifier 1107 is twice a quantity of bits for the slot and subchannel occupation identifier 1005 in FIG. 10. In an example, when a value of the 2 bits used to indicate the occupation status of one slot on one subchannel is 0, it indicates that the subchannel is not occupied in the corresponding slot. When the value of 2 bits used to indicate the occupation status of one slot on one subchannel is 1, it indicates that the time slice on the corresponding subchannel is occupied by one basic service set (Base Service Set, BSS for short). When the value of 2 bits used to indicate the occupation status of one slot on one subchannel is set to 2, it indicates that the corresponding slot on the subchannel is occupied by two BSSs. When the value of 2 bits used to indicate the occupation status of one slot on one subchannel is 3, it indicates that the corresponding slot on the subchannel is occupied by at least three BSSs. For example, referring to FIG. 4, the time period 2 on the subchannel 1 is occupied by two basic service sets, the time period 2 and the time period 3 on the subchannel 1 each are occupied by only one basic service set, the time period 2 on the subchannel 2 is occupied by one basic service set, the time period 4 on the subchannel 2 is occupied by two basic service sets, the time period 1 and the time period 3 on the subchannel 3 each are occupied by one basic service set, the time period 4 on the subchannel 4 is occupied by one basic service set, the time period 1 on the subchannel 5 is occupied by two basic service sets, and the time period 2 on the subchannel 6 is occupied by one basic service set. In this case, Table 2 shows a channel occupation status of the system. The slot and the subchannel occupation identifier 1107 may include 48 bits. In an example, first 8 bits indicate occupation statuses of all slots on the subchannel 1, and second 8 bits indicate occupation statuses of all slots on the subchannel 2. For example, the second 8 bits take a value of 00010100, indicating that a slot 2 (the time period 2) and a slot 4 (the time period 4) on the subchannel 2 are occupied by two basic service sets. By analogy, a value of the slot and subchannel occupation identifier may be obtained. For another example, first 12 bits indicate an occupation status of a scheduled subchannel corresponding to a slot 1. For example, first 12 bits takes a value of 000001001000, indicating that a slot 1 on the subchannel 5 is occupied by two basic service sets and that the time period 1 on the subchannel 3 is occupied by one basic service set. Second 12 bits indicate an occupation status of a scheduled subchannel corresponding to a slot 2. By analogy, the value of the slot and subchannel occupation identifier 1107 may be obtained.

**Table 2**

| | Slot 1 | Slot 2 | Slot 3 | Slot 4 |
|---|---|---|---|---|
| Subchannel 1 | 00 | 01 | 01 | 00 |
| Subchannel 2 | 00 | 01 | 00 | 10 |
| Subchannel 3 | 01 | 00 | 01 | 00 |
| Subchannel 4 | 00 | 00 | 00 | 01 |
| Subchannel 5 | 10 | 00 | 00 | 00 |
| Subchannel 6 | 00 | 01 | 01 | 00 |

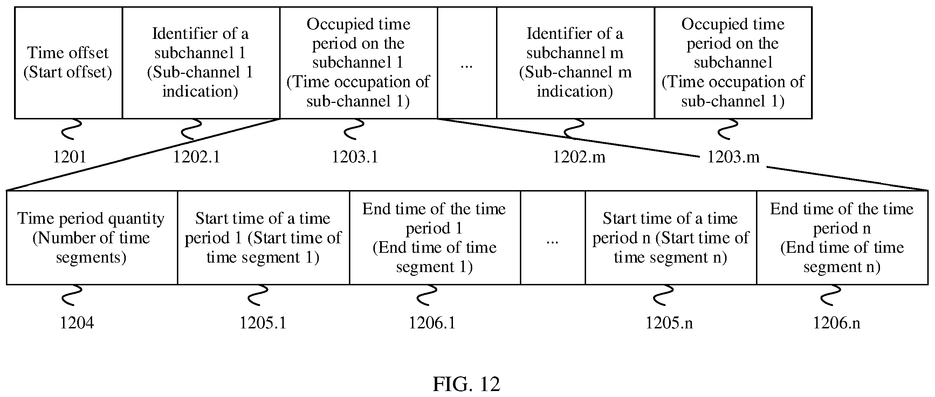

For still another example, FIG. 12 shows an example frame structure of the system channel occupation information when durations of at least two time periods occupied by devices in the entire system are different.

The system channel occupation information may include a time offset field 1201, which may be similar to the time offset field 1201. Details are not described herein again.

The system channel occupation information may further include identifiers used to indicate occupation information of time periods on a plurality of subchannels. Occupation information of a time period on each subchannel may include an identifier of the subchannel and an occupation status of a time period corresponding to the subchannel. For example, in FIG. 12, an example in which a first subchannel is a subchannel 1 is used. Occupation information of a time period on the subchannel 1 includes an identifier 1202.1 of the subchannel 1 and an occupied time period 1203.1 on the subchannel 1. The an occupied time period 1203. 1on the subchannel 1 may further include a time period quantity 1204 used to indicate a quantity of total occupied time periods on the subchannel 1, and a start time and an end time of each of the time periods, for example, a start time 1205.1 of a time period 1 and an end time 1206.1 of the time period 1.

S904: The parent node sends the system channel occupation information to the child node.

It should be noted that the system channel occupation information sent by the parent node to the child node may be carried in an independent frame. In an example, the system channel occupation information may be carried in a management frame as a field of the management frame and sent to the child node. In this case, the management frame may be a beacon frame. In still another example, the system channel occupation information may alternatively be carried in a new frame as a field of the new frame and sent to the child node.

It should be understood that steps S903 and S902 are replaceable in sequence. Alternatively, steps S903 and S904 may further be performed before steps S901 and S902. In addition, in another example, the system channel occupation information and the first channel allocation information may alternatively be carried in a same frame and sent to the child node. Alternatively, the system channel occupation information and the first channel allocation information may be carried in different frames and sent to the child node. This is not specifically limited in this embodiment of this application.

After the parent node sends the system channel occupation information to the child node, the child node of the parent node may further forward the system channel occupation information. In this way, the system channel occupation information may be sent to each node from the top down, so that each node generates channel occupation information of the node, to reduce a probability of collision in channel utilization. For example, as shown in FIG. 2, the access point AP 201 sends the system channel occupation information to the relays 202 and 203, and the relay 202 may further forward the system channel occupation information to the relay 204, so that the relay 204 may obtain a system channel occupation status.

S905: The child node generates second channel allocation information based on the first channel allocation information and the system channel occupation information.

After receiving the first channel allocation information, the child node generates the second channel allocation information based on channel occupation information of the parent node and the system channel occupation information. The second channel allocation information includes indication information used to indicate a second time period in which the child node communicates with the station associated with the child node on a subchannel. The second time period includes a first time period.

Similar to step S303, to ensure that the child node can communicate with the parent node on a subchannel (which is an operating channel between the parent node and the child node) when the parent node communicates with the child node in a first time period on the subchannel, operation time of the child node on the operating channel is a second time period, and the second time period includes the first time period.

Optionally, the second channel allocation information may further include indication information used to indicate operation time of the child node on another subchannel. Different from that in step S303, in this case, the child node may learn, based on the received system occupation information, that specific time periods on specific subchannels in the system are occupied. Therefore, when allocating the operation time on the another subchannel, the child node tries to avoid using an occupied time period on a subchannel as the operation time of the child node, or tries to select a time period having a relatively low occupation rate on a subchannel as the operation time of the child node.

In an example, the child node selects an unoccupied time period on a subchannel as the operation time of the child node on the another subchannel. For example, in FIG. 4, the relay 203 determines, based on system channel occupation information sent by the AP 201, that the time period 2 on the subchannel 1 is occupied by one basic service set, the time period 2 and the time period 3 on the subchannel 1 each are occupied by only one basic service set, the time period 2 on the subchannel 2 is occupied by one basic service set, the time period 4 on the subchannel 2 is occupied by two basic service sets, the time period 1 and the time period 3 on the subchannel 3 each are occupied by one basic service set, the time period 4 on the subchannel 4 is occupied by one basic service set, the time period 1 on the subchannel 5 is occupied by two basic service sets, and the time period 2 on the subchannel 6 is occupied by one basic service set. In this case, in an example, the relay 203 selects the time period 1 on the subchannel 1, the time period 3 on the subchannel 4, and the time period 4 on the subchannel 3 as operation time of the relay 203 on subchannels other than the subchannel 2.

In this case, second channel allocation information generated by the relay 203 includes indication information used to indicate the light gray time period 2 on the subchannel 2 and indication information used to indicate the time period 1 on the subchannel 1, the time period 3 on the subchannel 4, and the time period 4 on the subchannel 3.

In another example, when the subchannel time period occupation identifier included in the system channel occupation information is used to indicate a quantity of basic service sets that occupy each time period on each of the scheduled subchannel, the child node may select, as the operation time of the child node on the another subchannel different from the operating channel, a time period in time periods that are on specific subchannels and that each are occupied by a quantity, indicated by the subchannel time period occupation identifier, of zero basic service set or of basic service sets less than or equal to a preset value. For example, in FIG. 4, the relay 203 determines, based on system channel information sent by the AP 201, that the time period 2 on the subchannel 1 is occupied by one basic service set, the time period 2 and the time period 3 on the subchannel 1 each are occupied by only one basic service set, the time period 2 on the subchannel 2 is occupied by one basic service set, the time period 4 on the subchannel 2 is occupied by two basic service sets, the time period 1 and the time period 3 on the subchannel 3 each are occupied by one basic service set, the time period 4 on the subchannel 4 is occupied by one basic service set, the time period 1 on the subchannel 5 is occupied by two basic service sets, and the time period 2 on the subchannel 6 is occupied by one basic service set. In this case, the relay 203 may select a time period (which is not shown in FIG. 4) occupied by basic service sets of a quantity less than or equal to 1 as the operation time of the relay 203 on a subchannel different from the subchannel 2. It may be understood that the preset value can be flexibly set and adjusted. This is not specifically limited in this embodiment of this application.

When the child node selects the operation time of the child node based on the system channel occupation information, overlapping channel utilization between a plurality of relays may be avoided to a possible extent. This reduces a probability of collision and improves system efficiency.

S906: The child node sends the second channel allocation information to the station associated with the child node.

This step is similar to step S304, and details are not described herein again.

According to the solution in this embodiment of this application, the parent node exchanges the system channel occupation information with the child node, to coordinate interests of subchannel resources in the system. This may effectively reduce channel overlapping utilization between a plurality of nodes and a probability of collision in channel utilization.

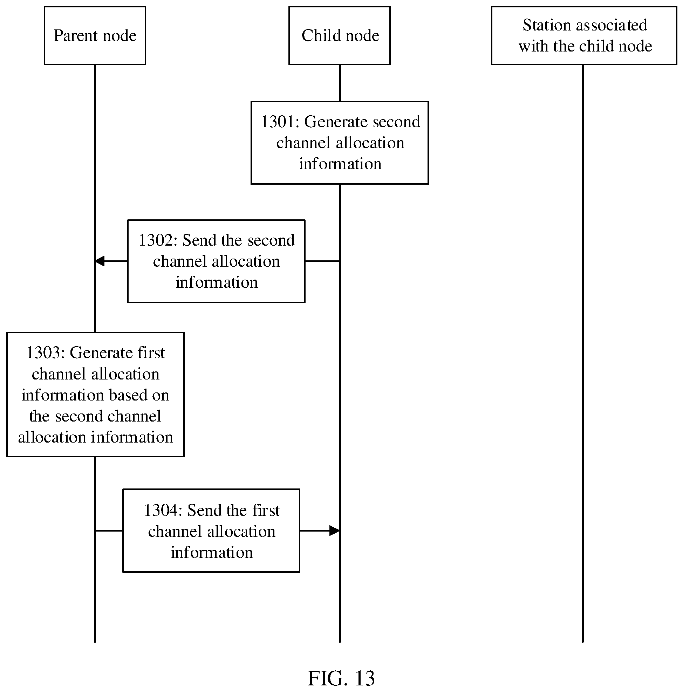

FIG. 13 is a schematic flowchart of another channel resource coordinated scheduling method according to an embodiment of this application. Different from the embodiment shown in FIG. 3, in this embodiment of this application, a child node sends channel occupation information of the child node to a parent node, so that the parent node determines channel occupation information of the parent node based on the channel occupation information of the child node. The method includes the following steps.

S1301: The child node generates second channel allocation information.

The second channel allocation information has a structure and function similar to those of the second channel allocation information generated by the child node in step S303. Details are not described herein again. In this embodiment of this application, the child node first sends the generated second channel allocation information to the parent node, so that the parent node generates first channel allocation information. The second channel allocation information includes indication information used to indicate a second time period on a subchannel, and the second time period is operation time of the child node on the subchannel. The subchannel is an operating channel between the parent node and the child node. For a method for determining the subchannel, refer to step S301.

Optionally, the second channel allocation information may further include operation time of the child node on another subchannel different from the subchannel. For example, light gray blocks in FIG. 4 are used as examples to describe the second channel allocation information of the child node. The child node is a relay 203. In this case, operation time of the relay 203 includes the light gray time period 2 on the subchannel 2 (the operating channel), the time period 1 on the subchannel 1, the time period 3 on the subchannel 4, and the time period 4 on the subchannel 3. Therefore, the second channel allocation information includes indication information used to indicate the light gray time period 2 on the subchannel 2 (the operating channel) and indication information used to indicate the time period 1 on the subchannel 1, the time period 3 on the subchannel 4, and the time period 4 on the subchannel 3. When duration of each time period in the operation time of the child node is equal, a frame structure of the second channel allocation information may be as shown in FIG. 5 or FIG. 6. Details are not described herein again.

When durations of at least two time periods in the operation time of the child node are unequal, the second channel allocation information further includes an end moment of each time period in the operation time of the child node. For another example, the second channel allocation information may further include duration of each time period in the operation time of the child node. A structure of the second channel allocation information may be as shown in FIG. 7 or FIG. 8. Details are not described herein again.

S1302: The child node sends the second channel allocation information to the parent node.

The child node sends the second channel allocation information to the parent node, so that the parent node determines the first channel allocation information based on the second channel allocation information.

Optionally, the first channel allocation information may be a field included in a management frame. For example, the first channel allocation information is an element included in a beacon frame. For another example, the first channel allocation information may be included in a new frame.

It may be understood that when the child node serves as a relay node and is further associated with a downstream relay node, the child node may further forward channel allocation information of a child node of the child node sent by the child node, and send channel allocation statuses, obtained through summarization from the bottom up, of nodes in an entire system to an access point AP, so that the access point AP obtains system channel occupation information. For example, as shown in FIG. 2, the relay 204 sends channel occupation information of the relay 204 to the relay 202, and the relay 202 forwards the channel occupation information of the relay 204 to the access point AP 201, so that the access point AP determines system channel occupation information.

S1303: The parent node generates the first channel allocation information based on the second channel allocation information.

The parent node generates the first channel allocation information based on the second channel allocation information Based on the received second channel allocation information, the parent node may learn that the operation time of the child node on the operating channel is the second time period. In this case, based on a principle that the child node can receive, in the second time period on the operating channel, data sent by the parent node to the child node, the parent node allocates the first time period on the operating channel as operation time, where the second time period includes the first time period. For example, referring to FIG. 2 and FIG. 4, an operating channel between the AP 201 and the relay 203 is the subchannel 2. The AP 201 learns, based on second channel allocation information sent by the relay 203, that operation time of the relay 203 on the subchannel 2 is the light gray time period 2. In this case, the AP 201 allocates the dark gray time period 2 on the subchannel 2 as the operation time based on the foregoing principle.

Optionally, the first channel allocation information generated by the parent node may further include: indicating a time period on another subchannel, where the another subchannel is a subchannel, in the system, other than the operating channel between the parent node and the child node. The time period on the another subchannel is a time period of the parent node on the another subchannel. For example, referring to FIG. 4, in addition to the dark gray time period 2 on the subchannel 2, the operation time of the parent node may further include the time period 1 on the subchannel 3, the time period 3 on the subchannel 1, and the time period 4 on the subchannel 4.

It may be understood that when duration of each time period in the operation time of the parent node is equal, the first channel allocation information may be similar to the first channel allocation information in the foregoing example. A specific data structure may also be as shown in FIG. 5 or FIG. 6. Details are not described herein again.

When durations of at least two time periods in the operation time of the parent node are unequal, the first channel allocation information may be similar to the first channel allocation information in the foregoing example. A specific data structure may also be as shown in FIG. 7 or FIG. 8. Details are not described herein again.

S1304: The parent node sends the first channel allocation information to child nodes including the child node.

The parent node sends the first channel allocation information to the child nodes including the child node, so that the child nodes obtain specific time periods and specific subchannels that can be used for communication between the child nodes and the parent node.

For example, referring to FIG. 2 and FIG. 4, the AP 201 generates the first channel allocation information based on the second channel allocation information sent by the relay 203, and sends the first channel allocation information to the relay 202 and the relay 204. In this case, the relay 202 and the relay 204 learn that communication with the AP 201 may be performed on the dark gray time period 2 on the subchannel 2, the time period 1 on the subchannel 3, the time period 3 on the subchannel 1, and the time period 4 on the subchannel 4.

According to the solution in this embodiment of this application, a case in which the parent node and the child node cannot communicate with each other because the parent node communicates with the child node in the time period 2 on the subchannel 2, but the child node operates in the time period 3 on the subchannel 2 and cannot receive data sent by the parent node in the time period 2 on the subchannel 2 can be avoided.

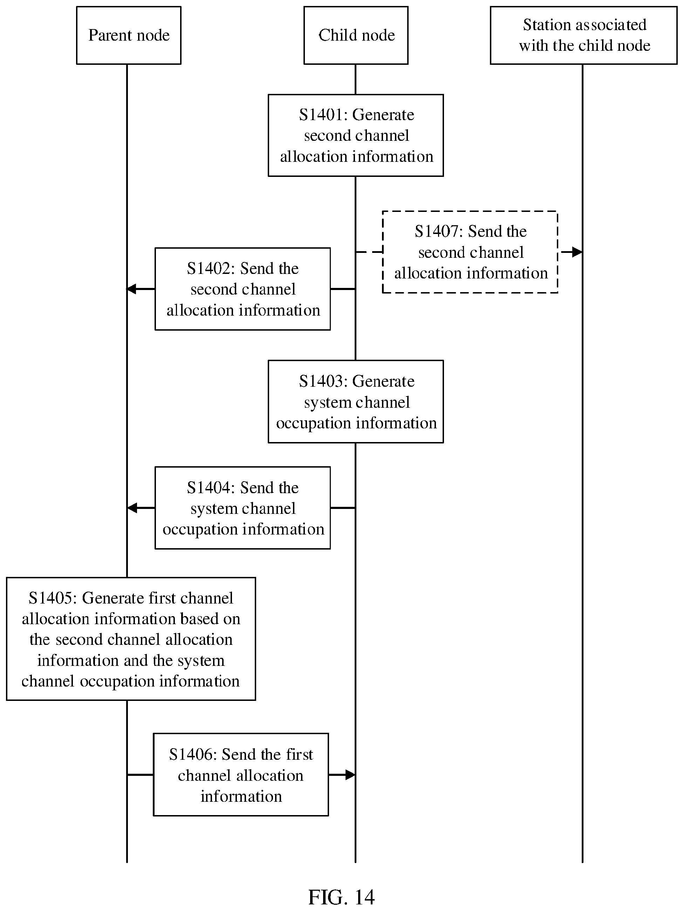

FIG. 14 is a schematic flowchart of a channel resource coordinated scheduling method according to an embodiment of this application. Different from that in the embodiment corresponding to FIG. 13, a child node may further send system channel occupation information to a parent node, so that the parent node determines occupation information of the parent node based on the system channel occupation information and occupation information of the child node. The method includes the following steps.

S1401: The child node generates second channel allocation information.

This step is similar to step S1301, and details are not described herein again.

S1402: The child node sends the second channel allocation information to the parent node.

This step is similar to step S1302, and details are not described herein again.

S1403: The child node generates the system channel occupation information.

This step is similar to step S903, and details are not described herein again. A difference lies in that, in step S1403, the system channel occupation information is generated by the child node and sent to the parent node. The system channel occupation information includes occupation information used to indicate a time period on a scheduled subchannel in a system. The system channel occupation information is used for the parent node to select an unoccupied time period on a subchannel or a time period having a relatively low occupation rate on a subchannel as operation time of the parent node, for communication with a child node of the parent node.

In a first case, before generating the system channel occupation information, the child node does not receive channel occupation information of any other child node fed back by the any other child node. In this case, occupied time periods in the system include operation time (which, for example, is shown as light gray blocks in FIG. 4) of the child node on subchannels. Therefore, the system channel occupation information includes information used to indicate an occupation status of the operation time of the child node on the subchannels.

In a second case, before generating the system channel occupation information, the child node further receives channel occupation information of other child nodes fed back by the other child nodes. In this case, the child node generates the system channel occupation information based on the channel occupation information of the child nodes. Operation time occupied on channels in the system includes operation time (which, for example, is shown as light gray blocks in FIG. 4) of the child node on the subchannels and operation time (which, for example, is shown as grid blocks in FIG. 4) of the other child nodes (which exclude the parent node) on the subchannels.

Refer to step S903 for a structure of the system channel occupation information, and an example of a data structure of the system channel occupation information may be as shown in FIG. 10 or FIG. 11. Details are not described herein again.

S1404: The child node sends the system channel occupation information to the parent node.

The step is similar to step S904, but a difference lies in that the system channel occupation information is sent by the child node to the parent node.

It should be understood that steps S1403 and S1402 are replaceable in sequence. Alternatively, steps S1403 and S 1404 may further be performed before steps S1401 and S 1402. In addition, in another example, the system channel occupation information and the second channel allocation information may alternatively be carried in a same frame and sent to the parent node. In still another example, the system channel occupation information and the second channel allocation information may be carried in different frames and sent to the parent node. This is not specifically limited in this embodiment of this application.

S1405: The parent node generates first channel allocation information based on the second channel allocation information and the system channel occupation information.

This step is similar to step S905, but a difference lies in that the parent node generates the first channel allocation information based on channel occupation information of the child node and the system channel occupation information after receiving the second channel allocation information.

Similar to step S303, to ensure that the child node can communicate with the parent node on a subchannel (which is an operating channel between the parent node and the child node) when the parent node communicates with the child node in a first time period on the subchannel, operation time of the child node on the operating channel is a second time period, and the second time period includes the first time period.

Optionally, the first channel allocation information further includes indication information used to indicate operation time of the parent node on another subchannel. Different from that in step S1303, in this case, the parent node may obtain, based on the received system occupation information, that specific time periods on specific subchannels in the system are occupied. Therefore, when allocating the operation time of the parent node on the another subchannel, the parent node tries to avoid selecting an occupied time period on a subchannel as the operation time of the parent node, or tries to select a time period having a relatively low occupation rate on a subchannel as the operation time of the parent node.

In an example, the parent node selects an unoccupied time period on a subchannel as the operation time of the parent node on the another subchannel. For example, referring to FIG. 2 and FIG. 4, the AP 201 determines, based on system channel occupation information sent by the relay 203, that grid time periods and light gray time periods in FIG. 4 are occupied. In this case, the AP 201 selects time periods, such as the time period 1 on the subchannel 3, the time period 4 on the subchannel 1, and the time period 4 on the subchannel 4, other than the grid time periods and light gray time periods as operation time of the AP 201 on other subchannels. Therefore, the first channel allocation information generated by the AP 201 includes indication information used to indicate the time period 1 on the subchannel 3, the time period 4 on the subchannel 1, and the time period 4 on the subchannel 4; and further includes indication information used to indicate the dark gray time period 2 on the subchannel 2.

For another example, when a subchannel time period occupation identifier included in the system channel occupation information is used to indicate a quantity of basic service sets that occupy each time period on each of the scheduled subchannel, the parent node may select, as the operation time of the child node on the another subchannel different from the operating channel, a time period in time periods that are on specific subchannels and that each are occupied by a quantity, indicated by the subchannel time period occupation identifier, of zero basic service set or of basic service sets less than or equal to a preset value. It may be understood that the preset value can be flexibly set and adjusted. This is not specifically limited in this embodiment of this application. When the parent node selects the operation time of the parent node based on the system channel occupation information, overlapping channel utilization between a plurality of relays may be avoided to a possible extent. This reduces a probability of collision and improves system efficiency.

S1406: The parent node sends the first channel allocation information to the child node.

The step is similar to step S1304, and is not specifically limited in this embodiment of this application.

Optionally, S1407 may be further included: The child node sends the second channel allocation information to a station associated with the child node.

After generating the second channel allocation information, the child node may further send the second channel allocation information to the station associated with the child node, so that after receiving the second channel allocation information, the station associated with the child node learns of specific time periods and specific subchannels that can be used for communication with the child node.

It may be understood that step S1407 may be performed after step S1401. For example, step S1407 and step S1402 may be performed at the same time, or step S1407 may be performed before or after step S1402.

According to the solution in this embodiment of this application, the parent node exchanges the system channel occupation information with the child node, to coordinate utilization of a subchannel resource in the system. This may effectively reduce channel overlapping utilization between a plurality of nodes and a probability of collision in channel utilization.

It should be noted that solutions shown in FIG. 3, FIG. 9, FIG. 13, and FIG. 14 in the embodiments of this application may be used in a logical manner.

In an example, in an allocation cycle, a parent node needs to perform subchannel selective transmission to communicate with another node, and the subchannel selective transmission may be initiated by the parent node. For example, the method shown in FIG. 3 is used to perform subchannel selective transmission. In another allocation cycle, when a child node needs to perform subchannel selective transmission, the method shown in FIG. 6 may be used.

It may be understood that, in a process of interaction between the parent node and the child node in the embodiments of this application, channel occupation information of the parent node and channel occupation information of the child node may alternatively be generated based on system channel occupation information. In an example, after receiving system channel occupation information sent by the child node, the parent node may obtain an occupation status of a time period on a subchannel in a system based on an occupation identifier in the system channel occupation information. Therefore, the parent node may generate the channel occupation information of the parent node, and try to select an unoccupied time period on a subchannel or a time period having a relatively low occupation rate on a subchannel, for communication with a child node associated with the parent node. In another example, after receiving system channel occupation information sent by the parent node, the child node may obtain an occupation status of a time period on a subchannel in a system based on an occupation identifier in the system channel occupation information. Therefore, the child node may generate the channel occupation information of the child node, and try to select an unoccupied time period on a subchannel or a time period having a relatively low occupation rate on a subchannel, for communication with a child node or station associated with the child node. Therefore, channel overlapping utilization can be reduced. In addition, this prevents a plurality of nodes from selecting a same time period on a subchannel for communication. Instead, an unoccupied time period is used. Therefore, both channel utilization and communication quality are improved.

The application scenario shown in FIG. 2 is used as an example. Both the access point AP 201 and the relay 203 need to switch between a plurality of subchannels in a subchannel selective transmission manner, to communicate with other nodes (for example, the parent node and the child node). In this case, the relay 202 does not need to perform communication in the subchannel selective transmission manner.

In a case, the access point AP 201 may send a beacon frame to the relay 203, where the beacon frame carries channel occupation information of the access point AP, that is, first channel allocation information. The relay 203 generates channel occupation information of the relay 203 based on the first channel allocation information, to ensure that a time period of the relay 203 on an operating channel between the relay 203 and the access point AP 201 includes a time period that is on the operating channel and that is allocated by the access point AP.

In another case, both the access point AP 201 and the relay 202 need to switch between a plurality of subchannels in the subchannel selective transmission manner, to communicate with other nodes (for example, the parent node and the child node). Previously, the relay 203 does not need to communicate with another node in the subchannel selective transmission manner. However, the subchannel selective transmission manner needs to be used as a quantity of child nodes or stations associated with the relay 203 increases; or another subchannel needs to be selected for communication because quality of an optimal channel or operating channel between the relay 203 and a child node or station associated with the relay 203 decreases. In this case, the relay 203 may obtain channel occupation information of the access point AP 201 and system channel occupation information. Based on the channel occupation information of the access point AP 201 sent by the access point AP 201 and the system channel occupation information, channel occupation information of the relay 203 may be allocated based on the following principles:
1. Operation time of the relay 203 on an operating channel between the relay 203 and the AP 201 includes operation time of the access point AP on the operating channel between the relay 203 and the AP 201.
2. The relay 203 selects an unoccupied time period or a time period having a relatively low occupation rate as the operation time of the relay, for communication between the relay 203 and the node or station associated with the relay 203.

Based on the foregoing two principles, matched communication between the relay 203 and the access point AP 201 can be ensured. In addition, an occupied time period in the system may be prevented from being selected to a possible extent, to avoid a conflict between a time period allocated by the relay 203 and time periods occupied by the access point AP 201 and the relay 202. Further, this may improve channel utilization.

In still another case, for example, few nodes are associated with the access point AP 201 in a first beacon cycle. For example, only the relay 202 is associated with the access point AP 201. In this case, the access point AP 201 does not perform subchannel selective transmission to communicate with the relay 202. In a second beacon cycle, a new node joins. For example, the relay 203 is associated with the access point AP 201. In this case, the access point AP needs to perform subchannel selective transmission to communicate with the relay 202 and the relay 203. In this case, in the first beacon cycle, the relay 202 may send, to the access point AP 201, a first beacon frame that carries first channel allocation information, to report channel occupation information of the relay 202 to the access point AP 201. In the second beacon cycle, the access point AP 201 determines a channel allocation status, that is, second channel allocation information, of the access point AP 201 based on the first channel allocation information sent by the relay 202. The channel allocation status of the access point AP 201 satisfies: If a subchannel occupied by the relay 202 in a time period between sending of a second beacon frame and sending of the first beacon frame is an operating channel between the access point AP and the relay 202, the access point AP 201 may communicate with the relay 202 in the time period. If a subchannel occupied by the relay 202 in the time period is not the operating channel between the access point AP and the relay 202, the access point AP 201 may send the second beacon frame to the relay 202. The second beacon frame indicates that the access point AP 201 may communicate with the relay 202 on the operating channel between the access point AP and the relay 202 in a time period after sending the second beacon frame. Further, after receiving the second beacon frame, the relay 202 may adjust a channel occupied by the relay 202, so that a time period occupied by the relay 202 on the operating channel includes a time period occupied by the access point AP on the operating channel.

The foregoing describes in detail the channel resource coordinated allocation method in the embodiments of this application, and the following describes the channel resource coordinated allocation apparatus in the embodiments of this application.

An embodiment of this application describes in detail a schematic structure of a channel resource allocation apparatus on a parent node side.

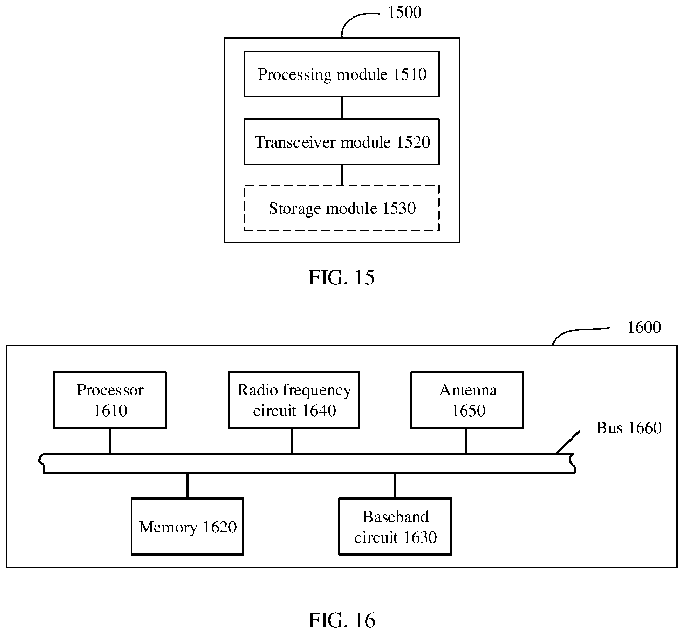

In an example, FIG. 15 is a schematic block diagram of a channel resource coordinated allocation apparatus 1500 according to an embodiment of this application. The apparatus 1500 in this embodiment of this application may be the parent node in the foregoing method embodiments, or may be one or more chips in the parent node. The apparatus 1500 may be configured to implement some or all of functions of the parent node in the foregoing method embodiments. The apparatus 1500 may include a processing module 1510 and a transceiver module 1520. Optionally, the apparatus 1500 may further include a storage module 1530.

For example, the processing module 1510 may be configured to perform step S301 in the foregoing method embodiments; or configured to perform steps S901, S903, and S905; or configured to perform step S1303; or configured to perform step S1405.

The transceiver module 1520 may be configured to perform step S302 in the foregoing method embodiments; or configured to perform steps S902 and S904; or configured to: receive second channel allocation information from a child node in step S1302 and perform step S1304; or configured to: receive second channel allocation information from a child node in step S1402, receive system channel occupation information from a child node in step S1404, and perform step S1406.

Alternatively, the apparatus 1500 may be configured as a universal processing system, which, for example, is generally referred to as a chip. The processing module 1510 may include one or more processors that provide a processing function. The transceiver module 1520, for example, may be an input/output interface, a pin, or a circuit. The input/output interface may be configured for information interaction between the chip system and the outside. For example, the input/output interface may output first channel allocation information generated by the parent node to another module outside the chip for processing. The processing module may execute a computer-executable instruction stored in the storage module, to implement the functions of the parent node in the foregoing method embodiments. In an example, the storage module 1530 optionally included in the apparatus 1500 may be a storage unit in the chip, such as a register or a cache. Alternatively, the storage module 1530 may be a storage unit located in the parent node but outside the chip, such as a read-only memory (read-only memory, ROM for short), another type of static storage device that can store static information and an instruction, or a random access memory (random access memory, RAM for short).

In another example, FIG. 16 is a schematic block diagram of another channel resource coordinated allocation apparatus 1600 according to an embodiment of this application. The apparatus 1600 in this embodiment of this application may be the parent node in the foregoing method embodiments. The apparatus 1600 may be configured to implement some or all of functions of the parent node in the foregoing method embodiments. The apparatus 1600 may include a processor 1610, a baseband circuit 1630, a radio frequency circuit 1640, and an antenna 1650. Optionally, the apparatus 1600 may further include a memory 1620. Components of the apparatus 1600 are coupled together by a bus 1660. In addition to a data bus, the bus system 1660 further includes a power bus, a control bus, and a status signal bus. However, for clear description, various types of buses in the figure are marked as the bus system 1660.

The processor 1610 may be configured to control the parent node, and is configured to perform processing performed by the parent node in the foregoing embodiments. The processor 1610 may perform a processing process related to the parent node in the foregoing method embodiments and/or is configured to perform another process of the technology described in this application. Further, the processor 1610 may run an operating system, is responsible for managing the bus, and may execute a program or an instruction stored in the memory.

The baseband circuit 1630, the radio frequency circuit 1640, and the antenna 1650 may be configured to support information receiving and sending between the parent node and the child node related to the foregoing embodiments, to support wireless communication between the parent node and the child node. In an example, second channel allocation information sent by the child node is received through the antenna 1650. Then, the second channel allocation information is processed by the radio frequency circuit 1640 through processing such as filtering, amplification, down-conversion, and digitization; processed by the baseband circuit 1630 through baseband processing such as decoding and protocol-based data de-encapsulation; and processed by the processor 1610, to restore service data and signaling information sent by the child node. In still another example, first channel allocation information that is of the parent node and that is used to indicate an operation time period of the parent node on a subchannel may be processed by the processor 1610. Then, the first channel allocation information is processed by the baseband circuit 1630 through baseband processing such as protocol-based encapsulation and encoding; further processed by the radio frequency circuit 1640 through radio frequency processing such as analog conversion, filtering, amplification, and up-conversion; and transmitted through the antenna 1650.

The memory 1620 may be configured to store program code and data of the parent node, and the memory 1620 may be the storage module 1530 in FIG. 15. It may be understood that the baseband circuit 1630, the radio frequency circuit 1640, and the antenna 1650 may be further configured to support communication between the parent node and another network entity, for example, communication between the parent node and a network element on a core network side. As shown in FIG. 16, the memory 1620 is separated from the processor 1610. However, it is readily figured out by a person skilled in the art that the memory 1620 or any part thereof may be located outside the channel resource allocation apparatus 1600. For example, the memory 1620 may include a transmission line and/or a computer product separated from a wireless node. These media may be accessed by the processor 1610 through the bus interface 1660. Alternatively, the memory 1620 or any part thereof may be integrated into the processor 1610, for example, may be a cache and/or a general purpose register.

It may be understood that FIG. 16 shows only a simplified design of the parent node. In an actual application, for example, the parent node may include any quantity of transmitters, receivers, processors, memories, and the like.

In a possible implementation, the channel resource allocation apparatus on the parent node side may alternatively be implemented through the following: one or more field programmable gate arrays (fieldprogrammable gate array, FPGA), a programmable logic device (programmable logic device, PLD), a controller, a state machine, gate logic, a discrete hardware component, any other suitable circuit, or any combination of circuits that can perform various functions described in this application. In still another example, an embodiment of this application further provides a computer storage medium. The computer storage medium may store a program instruction used to indicate any one of the foregoing methods, so that a processor executes the program instruction to perform the method and the function related to the parent node in the foregoing method embodiments.

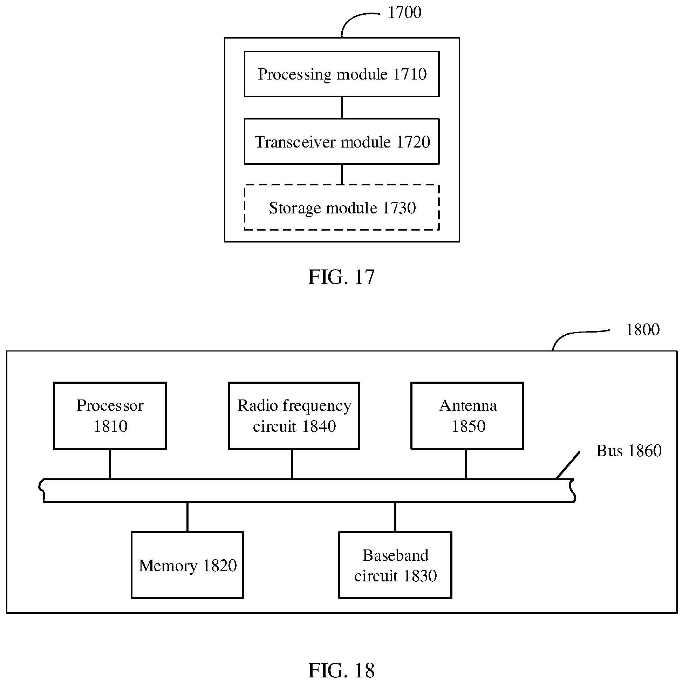

An embodiment of this application describes in detail a schematic structure of a channel resource allocation apparatus on a child node side. In an example, FIG. 17 is a schematic block diagram of a channel resource coordinated allocation apparatus 1700 according to an embodiment of this application. The apparatus 1700 in this embodiment of this application may be the child node in the foregoing method embodiments, or may be one or more chips in the child node. The apparatus 1700 may be configured to implement some or all of functions of the child node in the foregoing method embodiments. The apparatus 1700 may include a processing module 1710 and a transceiver module 1720. Optionally, the apparatus 1700 may further include a storage module 1730.

For example, the processing module 1710 may be configured to perform step S303 in the foregoing method embodiments; or configured to perform step S905; or configured to perform step S1301; or configured to perform steps S1401 and S1403.

The transceiver module 1720 may be used by the child node to receive first channel allocation information from a parent node in step S302 in the foregoing method embodiments; or configured to receive information from a parent node in steps S902 and S904; or configured to perform step S1302; or configured to perform steps S1402, S1404, and S1407.

Alternatively, the apparatus 1700 may be configured as a universal processing system, which, for example, is generally referred to as a chip. The processing module 1710 may include one or more processors that provide a processing function. The transceiver module, for example, may be an input/output interface, a pin, or a circuit. The input/output interface may be configured for information interaction between the chip system and the outside. For example, the input/output interface may output second channel allocation information generated by the child node to another module outside the chip for processing. The one or more processors may execute a computer-executable instruction stored in the storage module, to implement the functions of the child node in the foregoing method embodiments. In an example, the storage module 1730 optionally included in the apparatus 1700 may be a storage unit in the chip, such as a register or a cache. Alternatively, the storage module 1730 may be a storage unit located in the child node but outside the chip, such as a read-only memory (read-only memory, ROM for short), another type of static storage device that can store static information and an instruction, or a random access memory (random access memory, RAM for short).

In another example, FIG. 18 is a schematic block diagram of another channel resource coordinated allocation apparatus 1800 according to an embodiment of this application. The apparatus 1800 in this embodiment of this application may be the child node in the foregoing method embodiments. The apparatus 1800 may be configured to implement some or all of functions of the child node in the foregoing method embodiments. The apparatus 1800 may include a processor 1810, a baseband circuit 1830, a radio frequency circuit 1840, and an antenna 1850. Optionally, the apparatus 1800 may further include a memory 1820. Components of the apparatus 1800 are coupled together by a bus 1860. In addition to a data bus, the bus system 1860 further includes a power bus, a control bus, and a status signal bus. However, for clear description, various types of buses in the figure are marked as the bus system 1860.

The processor 1810 may be configured to control the child node, and is configured to perform processing performed by the child node in the foregoing embodiments. The processor 1810 may perform a processing process related to the parent node in the foregoing method embodiments and/or is configured to perform another process of the technology described in this application. Further, the processor 1810 may run an operating system, is responsible for managing the bus, and may execute a program or an instruction stored in the memory.

The baseband circuit 1830, the radio frequency circuit 1840, and the antenna 1850 may be configured to support information receiving and sending between the child node and the parent node related to the foregoing embodiments, to support wireless communication between the child node and the parent node. In an example, first channel allocation information sent by the parent node is received through the antenna 1850. Then, the first channel allocation information is processed by the radio frequency circuit through processing such as filtering, amplification, down-conversion, and digitization; processed by the baseband circuit through baseband processing such as decoding and protocol-based data de-encapsulation; and processed by the processor 1810, to restore service data and signaling information sent by the parent node. In still another example, second channel allocation information of the child node may be processed by the processor 1810. Then, the second channel allocation information is processed by the baseband circuit 1830 through baseband processing such as protocol-based encapsulation and encoding; further processed by the radio frequency circuit 1840 through radio frequency processing such as analog conversion, filtering, amplification, and up-conversion; and transmitted through the antenna 1850. The memory 1820 may be configured to store program code and data of the parent node, and the memory 1820 may be the storage module 1730 in FIG. 17. It may be understood that the baseband circuit 1830, the radio frequency circuit 1840, and the antenna 1850 may be further configured to support communication between the child node and another network entity, for example, communication between the child node and a station, such as the STA shown in FIG. 2, associated with the child node.

It may be understood that FIG. 18 shows only a simplified design of the child node. In an actual application, for example, the child node may include any quantity of transmitters, receivers, processors, memories, and the like.

In a possible implementation, the channel resource allocation apparatus on the child node side may alternatively be implemented through the following: one or more field programmable gate arrays (field-programmable gate array, FPGA), a programmable logic device (programmable logic device, PLD), a controller, a state machine, gate logic, a discrete hardware component, any other suitable circuit, or any combination of circuits that can perform various functions described in this application.

In still another example, an embodiment of this application further provides a computer storage medium. The computer storage medium may store a program instruction used to indicate any one of the foregoing methods, so that a processor executes the program instruction to perform the method and the function related to the child node in the foregoing method embodiments.

A processor in each of the apparatus 1600 and the apparatus 1800 may be a general purpose processor, such as a general purpose central processing unit (CPU), a network processor (Network Processor, NP for short), a microprocessor; or may be an application-specific integrated circuit (application-specific integrated circuit, ASIC for short), or one or more integrated circuits configured to control program execution in the solutions of this application. The processor in each of the apparatus 1600 and the apparatus 1800 may further be a digital signal processor (Digital Signal Processor, DSP for short), a field programmable gate array (Field-Programmable Gate Array, FPGA for short) or another programmable logic device, a discrete gate or a transistor logic device, or a discrete hardware component. Alternatively, the controller/processor may be a combination of processors implementing a computing function, for example, a combination of one or more microprocessors, or a combination of the DSP and the microprocessor. The processor usually performs logical and arithmetic operations based on a program instruction stored in the memory.

A memory in each of the apparatus 1600 and the apparatus 1800 may further store an operating system and another application program. Specifically, the program may include program code, and the program code includes a computer operation instruction. More specifically, the memory may be a read-only memory (read-only memory, ROM for short), another type of static storage device that can store static information and an instruction, a random access memory (random access memory, RAM for short), another type of dynamic storage device that can store information and an instruction, or a magnetic disk storage, or the like. The memory may be a combination of the foregoing memories. In addition, the computer-readable storage medium/memory may be located in the processor, or may be located outside the processor, or distributed in a plurality of entities including a processor or a processing circuit. The computer-readable storage medium/memory may be specifically embodied in a computer program product. For example, the computer program product may include a computer-readable medium in packaging materials.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

All or some of the foregoing embodiments may be implemented by software, hardware, firmware, or any combination thereof. When software is used to implement the embodiments, some or all of the embodiments may be implemented in a form of a computer program product. The computer program product includes one or more computer instructions. When the computer program instructions are loaded and executed on the computer, some or all of the procedures or functions according to this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solidstate drive solid state disk), or the like.

## Claims

1. A channel resource coordinated allocation method, wherein a relay device is one of one or more child nodes of an access point, AP, and the method comprises:
receiving (302), by the relay device, first channel allocation information sent by the AP, wherein the first channel allocation information comprises indication information used to indicate a first time period on a subchannel, and the first time period is operation time of the AP on the subchannel, in which the AP communicates with the relay device;
generating (303), by the relay device, second channel allocation information based on the first channel allocation information, wherein the second channel allocation information comprises indication information used to indicate a second time period on the subchannel, and the second time period is operation time of the relay device on the subchannel, in which the relay device communicates with the AP and child nodes associated with the relay device; wherein
the second time period includes the first time period; and
sending (304), by the relay device, the second channel allocation information to a child node of the relay device.

2. The method according to claim 1, wherein the subchannel is one of a plurality of subchannels, and the second channel allocation information further comprises indication information used to indicate a time period on another subchannel different from the subchannel in the plurality of subchannels, wherein the time period on the another subchannel is operation time of the relay device on the another subchannel and is different from the second time period.

3. The method according to claim 1 or 2, wherein the second channel allocation information comprises:
a time offset, used to indicate a start moment of the 1st time period in operation time of the relay device;
a time period quantity identifier, used to indicate a quantity of time periods in the operation time of the relay device; and
a subchannel identifier, used to indicate a subchannel corresponding to each time period in the operation time of the relay device.

4. The method according to any one of claims 1 to 3, wherein when duration of each time period in the operation time of the relay device is equal, the second channel allocation information further comprises the duration of the time period in the operation time of the relay device.

5. The method according to any one of claims 1 to 3, wherein when durations of at least two time periods in the operation time of the relay device are unequal, the second channel allocation information further comprises an end moment of each time period in the operation time of the relay device.

6. The method according to any one of claims 1 to 5, wherein the subchannel is one of the plurality of subchannels, and the first channel allocation information further comprises indication information used to indicate operation time of the AP on another subchannel different from the subchannel in the plurality of subchannels, wherein the operation time of the AP on the another subchannel different from the subchannel in the plurality of subchannels is different from the first time period.

7. The method according to any one of claims 1 or 6, wherein the first channel allocation information comprises:
a time offset, used to indicate a start moment of the 1st time period in operation time of the AP;
a time period quantity identifier, used to indicate a quantity of time periods in the operation time of the AP; and
a subchannel identifier, used to indicate a subchannel corresponding to each time period in the operation time of the AP; wherein
the operation time of the AP comprises at least the first time period.

8. The method according to claim 7, wherein
when duration of each time period in the operation time of the AP is equal, the first channel allocation information further comprises the duration of the time period in the operation time of the AP.

9. The method according to claim 7, wherein
when durations of at least two time periods in the operation time of the AP are unequal, the first channel allocation information further comprises an end moment of each time period in the operation time of the AP.

10. The method according to any one of claims 1 to 9, wherein the method further comprises: receiving, by the relay device, occupation information used to indicate a time period on a scheduled subchannel in a system, wherein the scheduled subchannel at least comprises at least the subchannel, the system comprises the AP and a plurality of relay devices, and the relay device is one of the plurality of relay devices.

11. The method according to claim 10, wherein the occupation information comprises:
a time offset, used to indicate a start moment of the 1st time period in time periods occupied on the scheduled subchannel in the system;
a time period quantity identifier, used to indicate a quantity of time periods occupied on the scheduled subchannel in the system;
a subchannel identifier, used to indicate each of the scheduled subchannel; and
a subchannel time period occupation identifier, used to indicate whether each time period on each of the scheduled subchannel in the system is occupied, or used to indicate a quantity of basic service sets that occupy each time period on each of the scheduled subchannel in the system; wherein
the time period occupied on the scheduled subchannel in the system comprises at least the first time period.

12. A relay device (1700), wherein the relay device (1700) is one of one or more child nodes of an access point, AP, and the relay device (1700) comprises:
a transceiver (1720), configured to receive first channel allocation information sent by the AP, wherein the first channel allocation information comprises indication information used to indicate a first time period on a subchannel, and the first time period is operation time of the AP on the subchannel, in which the AP communicates with the relay device; and
a processor (1710), configured to generate second channel allocation information based on the first channel allocation information, wherein the second channel allocation information comprises indication information used to indicate a second time period on the subchannel, and the second time period is operation time of the relay device on the subchannel, in which the relay device communicates with the AP and child nodes associated with the relay device; wherein
the second time period includes the first time period; and
the transceiver (1720) is configured to send the second channel allocation information to a child node of the relay device (1700).

13. A computer-readable storage medium, comprising an instruction, wherein when the instruction is run on a computer, the computer performs the method according to any one of claims 1 to 11.

## Patentansprüche

1. Verfahren zur Kanalressourcenkoordination, wobei eine Relaisvorrichtung einer von einem oder mehreren untergeordneten Knoten eines Zugangspunkts (access point - AP) ist und das Verfahren Folgendes umfasst:
Empfangen (302) erster Kanalzuteilungsinformationen, die von dem AP gesendet werden, durch die Relaisvorrichtung, wobei die ersten Kanalzuteilungsinformationen Anzeigeinformationen umfassen, die zum Anzeigen eines ersten Zeitraums auf einem Unterkanal verwendet werden, und der erste Zeitraum eine Betriebszeit des AP auf dem Unterkanal ist, in der der AP mit der Relaisvorrichtung kommuniziert;
Generieren (303) zweiter Kanalzuteilungsinformationen durch die Relaisvorrichtung auf der Grundlage der ersten Kanalzuteilungsinformationen, wobei die zweiten Kanalzuteilungsinformationen Anzeigeinformationen umfassen, die zum Anzeigen einer zweiten Zeitperiode auf dem Unterkanal verwendet werden, und die zweite Zeitperiode eine Betriebszeit der Relaisvorrichtung auf dem Unterkanal ist, in der die Relaisvorrichtung mit dem AP und den mit der Relaisvorrichtung assoziierten untergeordneten Knoten kommuniziert; wobei der zweite Zeitraum den ersten Zeitraum beinhaltet; und
Senden (304) der zweiten Kanalzuteilungsinformationen durch die Relaisvorrichtung an einen untergeordneten Knoten der Relaisvorrichtung.

2. Verfahren nach Anspruch 1, wobei der Unterkanal einer von einer Vielzahl von Unterkanälen ist und die zweiten Kanalzuteilungsinformationen ferner Anzeigeinformationen umfassen, die verwendet werden, um einen Zeitraum auf einem anderen Unterkanal anzuzeigen, der sich von dem Unterkanal in der Vielzahl von Unterkanälen unterscheidet, wobei der Zeitraum auf dem anderen Unterkanal eine Betriebszeit der Relaisvorrichtung auf dem anderen Unterkanal ist und sich von dem zweiten Zeitraum unterscheidet.

3. Verfahren nach Anspruch 1 oder 2, wobei die zweiten Kanalzuteilungsinformationen Folgendes umfassen:
einen Zeitversatz, der verwendet wird, um einen Startzeitpunkt des ersten Zeitraums in einer Betriebszeit der Relaisvorrichtung anzuzeigen;
einen Zeitraum-Mengenbezeichner, der verwendet wird, um eine Menge von Zeiträumen in der Betriebszeit der Relaisvorrichtung anzuzeigen; und
einen Unterkanalbezeichner, der verwendet wird, um einen Unterkanal anzuzeigen, der mit jedem Zeitraum in der Betriebszeit der Relaisvorrichtung korrespondiert.

4. Verfahren nach einem der Ansprüche 1 bis 3, wobei, wenn die Dauer jedes Zeitraums in der Betriebszeit der Relaisvorrichtung gleich ist, die zweiten Kanalzuteilungsinformationen ferner die Dauer des Zeitraums in der Betriebszeit der Relaisvorrichtung umfassen.

5. Verfahren nach einem der Ansprüche 1 bis 3, wobei, wenn die Dauer von mindestens zwei Zeiträumen in der Betriebszeit der Relaisvorrichtung ungleich ist, die zweiten Kanalzuteilungsinformationen ferner einen Endzeitpunkt jedes Zeitraums in der Betriebszeit der Relaisvorrichtung umfassen.

6. Verfahren nach einem der Ansprüche 1 bis 5, wobei der Unterkanal einer der Vielzahl von Unterkanälen ist und die ersten Kanalzuteilungsinformationen ferner Anzeigeinformationen umfassen, die verwendet werden, um eine Betriebszeit des AP auf einem anderen Unterkanal anzuzeigen, der sich von dem Unterkanal in der Vielzahl von Unterkanälen unterscheidet, wobei die Betriebszeit des AP auf dem anderen Unterkanal, der sich von dem Unterkanal in der Vielzahl von Unterkanälen unterscheidet, sich von dem ersten Zeitraum unterscheidet.

7. Verfahren nach einem der Ansprüche 1 oder 6, wobei die ersten Kanalzuteilungsinformationen Folgendes umfassen:
einen Zeitversatz, der verwendet wird, um einen Startzeitpunkt des ersten Zeitraums in einer Betriebszeit des AP anzuzeigen;
einen Zeitraum-Mengenbezeichner, der verwendet wird, um eine Menge von Zeiträumen in der Betriebszeit des AP anzuzeigen; und
einen Unterkanalbezeichner, der verwendet wird, um einen Unterkanal anzuzeigen, der mit jedem Zeitraum in der Betriebszeit des AP korrespondiert; wobei
die Betriebszeit des AP mindestens den ersten Zeitraum umfasst.

8. Verfahren nach Anspruch 7, wobei,
wenn die Dauer jedes Zeitraums in der Betriebszeit des AP gleich ist, die ersten Kanalzuteilungsinformationen ferner die Dauer des Zeitraums in der Betriebszeit des AP umfassen.

9. Verfahren nach Anspruch 7, wobei,
wenn die Dauer von mindestens zwei Zeiträumen in der Betriebszeit des AP ungleich ist, die ersten Kanalzuteilungsinformationen ferner einen Endzeitpunkt jedes Zeitraums in der Betriebszeit des AP umfassen.

10. Verfahren nach einem der Ansprüche 1 bis 9, wobei das Verfahren ferner Folgendes umfasst: Empfangen von Belegungsinformationen durch die Relaisvorrichtung, die verwendet werden, um einen Zeitraum auf einem geplanten Unterkanal in einem System anzuzeigen, wobei der geplante Unterkanal mindestens den Unterkanal umfasst, das System den AP und eine Vielzahl von Relaisvorrichtungen umfasst und die Relaisvorrichtung eine der Vielzahl von Relaisvorrichtungen ist.

11. Verfahren nach Anspruch 10, wobei die Belegungsinformationen Folgendes umfassen:
einen Zeitversatz, der verwendet wird, um einen Startzeitpunkt des ersten Zeitraums in Zeiträumen anzuzeigen, die auf dem geplanten Unterkanal in dem System belegt sind;
einen Zeitraum-Mengenbezeichner, der verwendet wird, um eine Menge von Zeiträumen anzuzeigen, die auf dem geplanten Unterkanal in dem System belegt sind;
einen Unterkanalbezeichner, der verwendet wird, um jeden der geplanten Unterkanäle anzuzeigen; und
einen Unterkanal-Zeitraum-Belegungsbezeichner, der verwendet wird, um anzuzeigen, ob jeder Zeitraum auf jedem der geplanten Unterkanäle in dem System belegt ist, oder um eine Menge von Basisdienstsätzen anzuzeigen, die jeden Zeitraum auf jedem der geplanten Unterkanäle in dem System belegen; wobei
der auf dem geplanten Unterkanal in dem System belegte Zeitraum mindestens den ersten Zeitraum umfasst.

12. Relaisvorrichtung (1700), wobei die Relaisvorrichtung (1700) einer von einem oder mehreren untergeordneten Knoten eines Zugangspunkts (AP) ist und die Relaisvorrichtung (1700) Folgendes umfasst:
einen Sender-Empfänger (1720), konfiguriert, um von dem AP gesendete erste Kanalzuteilungsinformationen zu empfangen, wobei die ersten Kanalzuteilungsinformationen Anzeigeinformationen umfassen, die verwendet werden, um einen ersten Zeitraum auf einem Unterkanal anzuzeigen, und der erste Zeitraum eine Betriebszeit des AP auf dem Unterkanal ist, in der der AP mit der Relaisvorrichtung kommuniziert; und
einen Prozessor (1710), konfiguriert, um auf der Grundlage der ersten Kanalzuteilungsinformationen zweite Kanalzuteilungsinformationen zu generieren, wobei die zweiten Kanalzuteilungsinformationen Anzeigeinformationen umfassen, die verwendet werden, um einen zweiten Zeitraum auf dem Unterkanal anzuzeigen, und der zweite Zeitraum eine Betriebszeit der Relaisvorrichtung auf dem Unterkanal ist, in der die Relaisvorrichtung mit dem AP und den mit der Relaisvorrichtung assoziierten untergeordneten Knoten kommuniziert; wobei
der zweite Zeitraum den ersten Zeitraum beinhaltet; und
der Sender-Empfänger (1720) konfiguriert ist, um die zweiten Kanalzuteilungsinformationen an einen untergeordneten Knoten der Relaisvorrichtung (1700) zu senden.

13. Computerlesbares Speichermedium, umfassend einen Befehl, wobei der Computer, wenn der Befehl auf einem Computer ausgeführt wird, das Verfahren nach einem der Ansprüche 1 bis 11 ausführt.

## Revendications

1. Procédé d'attribution coordonnée de ressources de canal, dans lequel un dispositif relais est l'un d'un ou de plusieurs nœuds enfants d'un point d'accès, AP, et le procédé comprend :
la réception (302), par le dispositif relais, de premières informations d'attribution de canal envoyées par l'AP, dans lequel les premières informations d'attribution de canal comprennent des informations d'indication utilisées pour indiquer une première période sur un sous-canal, et la première période est le temps de fonctionnement de l'AP sur le sous-canal, dans lequel l'AP communique avec le dispositif relais ;
la génération (303), par le dispositif relais, de secondes informations d'attribution de canal sur la base des premières informations d'attribution de canal, dans lequel les secondes informations d'attribution de canal comprennent des informations d'indication utilisées pour indiquer une seconde période sur le sous-canal, et la seconde période est le temps de fonctionnement du dispositif relais sur le sous-canal, dans lequel le dispositif relais communique avec l'AP et les nœuds enfants associés au dispositif relais ; dans lequel
la seconde période comporte la première période ; et
l'envoi (304), par le dispositif relais, des secondes informations d'attribution de canal à un nœud enfant du dispositif relais.

2. Procédé selon la revendication 1, dans lequel le sous-canal est l'un d'une pluralité de sous-canaux, et les secondes informations d'attribution de canal comprennent également des informations d'indication utilisées pour indiquer une période sur un autre sous-canal différent du sous-canal dans la pluralité de sous-canaux, dans lequel la période sur l'autre sous-canal est le temps de fonctionnement du dispositif relais sur l'autre sous-canal et est différente de la seconde période.

3. Procédé selon la revendication 1 ou 2, dans lequel les secondes informations d'attribution de canal comprennent :
un décalage temporel, utilisé pour indiquer un moment de début de la 1re période dans le temps de fonctionnement du dispositif relais ;
un identifiant de quantité de période, utilisé pour indiquer une quantité de périodes dans le temps de fonctionnement du dispositif relais ; et
un identifiant de sous-canal, utilisé pour indiquer un sous-canal correspondant à chaque période dans le temps de fonctionnement du dispositif relais.

4. Procédé selon l'une quelconque des revendications 1 à 3, dans lequel lorsque la durée de chaque période dans le temps de fonctionnement du dispositif relais est égale, les secondes informations d'attribution de canal comprennent également la durée de la période dans le temps de fonctionnement du dispositif relais.

5. Procédé selon l'une quelconque des revendications 1 à 3, dans lequel lorsque les durées d'au moins deux périodes dans le temps de fonctionnement du dispositif relais sont inégales, les secondes informations d'attribution de canal comprennent également un moment de fin de chaque période dans le temps de fonctionnement du dispositif relais.

6. Procédé selon l'une quelconque des revendications 1 à 5, dans lequel le sous-canal est l'un de la pluralité de sous-canaux, et les premières informations d'attribution de canal comprennent également des informations d'indication utilisées pour indiquer le temps de fonctionnement de l'AP sur un autre sous-canal différent du sous-canal dans la pluralité de sous-canaux, dans lequel le temps de fonctionnement de l'AP sur l'autre sous-canal différent du sous-canal dans la pluralité de sous-canaux est différent de la première période.

7. Procédé selon l'une quelconque des revendications 1 à 6, dans lequel les premières informations d'attribution de canal comprennent :
un décalage temporel, utilisé pour indiquer un moment de début de la 1re période dans le temps de fonctionnement de l'AP ;
un identifiant de quantité de période, utilisé pour indiquer une quantité de périodes dans le temps de fonctionnement de l'AP ; et
un identifiant de sous-canal, utilisé pour indiquer un sous-canal correspondant à chaque période dans le temps de fonctionnement de l'AP ; dans lequel
le temps de fonctionnement de l'AP comprend au moins la première période.

8. Procédé selon la revendication 7, dans lequel
lorsque la durée de chaque période dans le temps de fonctionnement de l'AP est égale, les premières informations d'attribution de canal comprennent également la durée de la période dans le temps de fonctionnement de l'AP.

9. Procédé selon la revendication 7, dans lequel
lorsque les durées d'au moins deux périodes dans le temps de fonctionnement de l'AP sont inégales, les premières informations d'attribution de canal comprennent également un moment de fin de chaque période dans le temps de fonctionnement de l'AP.

10. Procédé selon l'une quelconque des revendications 1 à 9, dans lequel le procédé comprend également : la réception, par le dispositif relais, d'informations d'occupation utilisées pour indiquer une période sur un sous-canal planifié dans un système, dans lequel le sous-canal planifié comprend au moins le sous-canal, le système comprend l'AP et une pluralité de dispositifs relais, et le dispositif relais est l'un de la pluralité de dispositifs relais.

11. Procédé selon la revendication 10, dans lequel les informations d'occupation comprennent :
un décalage horaire, utilisé pour indiquer un moment de début de la 1re période dans les périodes occupées sur le sous-canal planifié dans le système ;
un identifiant de quantité de période, utilisé pour indiquer une quantité de périodes occupées sur le sous-canal planifié dans le système ;
un identifiant de sous-canal, utilisé pour indiquer chacun des sous-canaux planifiés ; et
un identifiant d'occupation de période de sous-canal, utilisé pour indiquer si chaque période sur chacun des sous-canaux planifiés dans le système est occupée, ou utilisé pour indiquer une quantité d'ensembles de services de base qui occupent chaque période sur chacun du sous-canal planifié dans le système ; dans lequel
la période occupée sur le sous-canal planifié dans le système comprend au moins la première période.

12. Dispositif relais (1700), dans lequel le dispositif relais (1700) est l'un d'un ou de plusieurs nœuds enfants d'un point d'accès, AP, et le dispositif relais (1700) comprend :
un émetteur-récepteur (1720), configuré pour recevoir de premières informations d'attribution de canal envoyées par l'AP, dans lequel les premières informations d'attribution de canal comprennent des informations d'indication utilisées pour indiquer une première période sur un sous-canal, et la première période est le temps de fonctionnement de l'AP sur le sous-canal, dans lequel l'AP communique avec le dispositif relais ; et
un processeur (1710), configuré pour générer de secondes informations d'attribution de canal sur la base des premières informations d'attribution de canal, dans lequel les secondes informations d'attribution de canal comprennent des informations d'indication utilisées pour indiquer une seconde période sur le sous-canal, et la seconde période est le temps de fonctionnement du dispositif relais sur le sous-canal, dans lequel le dispositif relais communique avec l'AP et les nœuds enfants associés au dispositif relais ; dans lequel
la seconde période comporte la première période ; et
l'émetteur-récepteur (1720) est configuré pour envoyer les secondes informations d'attribution de canal à un nœud enfant du dispositif relais (1700).

13. Support de stockage lisible par ordinateur, comprenant une instruction, dans lequel, lorsque l'instruction est exécutée sur un ordinateur, l'ordinateur effectue le procédé selon l'une quelconque des revendications 1 à 11.
